(19) Europäisches Patentamt
European Patent Office
Office européen des brevets

(11) **EP 3 082 275 B1**

(12) **FASCICULE DE BREVET EUROPEEN**

(45) Date de publication et mention
de la délivrance du brevet:
**01.11.2017  Bulletin 2017/44**

(51) Int Cl.:
**H04B 7/185** *(2006.01)*    **H04B 7/204** *(2006.01)*

(21) Numéro de dépôt: **16164766.4**

(22) Date de dépôt: **11.04.2016**

(54) **SYSTÈME DE RADIOCOMMUNICATIONS SATELLITAIRE MULTIFAISCEAUX LARGE BANDE À RÉUTILISATION AMÉLIORÉE DE FRÉQUENCES SUR VOIE ALLER ET PROCÉDÉ DE RÉUTILISATION ASSOCIÉ**

BREITBAND-SATELLITEN-MEHRFACHSTRAHL-FUNKSYSTEM, DAS FÜR EINE VERBESSERTE WIEDERVERWENDUNG VON EINGEHENDEN FREQUENZEN KONFIGURIERT IST, UND ENTSPRECHENDES WIEDERVERWENDUNGSVERFAHREN

BROADBAND MULTIBEAM SATELLITE RADIO COMMUNICATION SYSTEM WITH IMPROVED REUSE OF FREQUENCIES ON THE FORWARD CHANNEL, AND ASSOCIATED METHOD FOR REUSE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **15.04.2015  FR 1500785**

(43) Date de publication de la demande:
**19.10.2016  Bulletin 2016/42**

(73) Titulaire: **THALES**
**92400 Courbevoie (FR)**

(72) Inventeurs:
• **HIRSCH, Antonin**
**31100 Toulouse (FR)**
• **BOSSHARD, Pierre**
**31100 Toulouse (FR)**
• **LE BOULC'H, Didier**
**31100 Toulouse (FR)**
• **PRESSENCE, Judicael**
**31100 Toulouse (FR)**

(74) Mandataire: **Tanguy, Yannick et al**
**Marks & Clerk France**
**Conseils en Propriete Industrielle**
**Immeuble Visium**
**22, avenue Aristide Briand**
**94117 Arcueil Cedex (FR)**

(56) Documents cités:
**EP-A1- 2 434 578        EP-A2- 2 099 142**
**US-A1- 2011 053 628    US-A1- 2012 034 915**

• **NG UI YI ET AL: "Interference coordination for the return link of a multibeam satellite system", 2014 7TH ADVANCED SATELLITE MULTIMEDIA SYSTEMS CONFERENCE AND THE 13TH SIGNAL PROCESSING FOR SPACE COMMUNICATIONS WORKSHOP (ASMS/SPSC), IEEE, 8 septembre 2014 (2014-09-08), pages 366-373, XP032668136, DOI: 10.1109/ASMS-SPSC.2014.6934569**

**Description**

La présente invention concerne un système de radiocommunications satellitaire multifaisceaux large bande à capacité élevée, configuré pour une réutilisation fractionnaire ou complète de fréquences en voie aller et un procédé de réutilisation améliorée de fréquences correspondant.

Les satellites actuels de radiocommunications à débit élevé et de seconde génération fonctionnant en bande Ka offrent des capacités de transmission élevées, de l'ordre de la centaine de Gbps, grâce à l'utilisation de faisceaux ou pinceaux fins d'antenne, combinée à une réutilisation spatiale des ressources fréquentielles dans une large bande fixée et à une stratégie efficace de modulation et de codage adaptatifs des canaux de transmission.

Parmi les schémas classiques de réutilisation de fréquences, le schéma qui correspond à une allocation de quatre sous-bandes distinctes sur l'ensemble des spots de couverture de l'antenne multifaisceaux suivant un motif à quatre couleurs est bien connu. Un schéma de réutilisation de fréquence à quatre couleurs, désigné par l'abréviation 4-FR (en anglais 4 colours Frequency Reuse), divise la totalité de la bande allouée au système en quatre sous-bandes de fréquences distinctes ou quatre couleurs, et laisse des faisceaux adjacents de l'antenne satellite d'émission ou de réception, émettre sur les différentes sous-bandes suivant une voie aller depuis le satellite vers le sol, ou recevoir sur les différentes sous-bandes suivant une voie retour depuis le sol vers le satellite. Un schéma de réutilisation de fréquences à quatre couleurs 4-FR permet d'avoir une distance minimale inter-faisceaux constante entre des faisceaux de même couleur, et en conséquence d'obtenir un compromis raisonnable entre le facteur de réutilisation de la bande et l'isolation entre les faisceaux.

Toutefois, lorsque, à nombre fixé de faisceaux d'une couverture géographique, on cherche à diminuer le nombre de couleurs, le C/I de réutilisation de fréquence, déterminé par la distance entre deux spots de même couleur diminue, ce qui diminue l'efficacité spectrale et limite, voir empêche, un gain de capacité de communication du système.

Pour améliorer la capacité totale du système dans un contexte de voie aller, c'est-à-dire des spots d'émission de l'antenne satellite, l'article de O. Vidal et al., intitulé « Fractional Frequency Reuse in fixed Boadband High Throughput Satellite systems » et publié dans les Proceedings of 31 st AIAA International Communication Satellite Systems Conférence, October 14-17, 2013, Florence, Italy, décrit une solution qui augmente la largeur de bande utilisée par spot pour chacun des spots d'une couverture. Cette solution met à profit des schémas de réutilisation fractionnée de fréquences, dénommée en anglais FFR pour « Fractional Frequency Reuse », qui sont utilisés dans les réseaux mobiles terrestre tels que WiMAX et LTE. La technique FFR appliquée dans un système de radiocommunications satellitaire dans un contexte de voie aller est une technique de réutilisation de fréquences qui recouvre les motifs classiques de couleurs, c'est-à-dire par exemple 3, 4, 7, 12 couleurs en les combinant avec des schémas de réutilisation plus denses des fréquences au sein de chaque faisceau. Le document de O. Vidal décrit sans limitation de généralité un schéma de réutilisation classique à 7 couleurs (7-FR) combiné à un schéma de pleine réutilisation d'une sous-bande (1-FR). Dans cette configuration, la sous-bande F0 du schéma 1-FR et les sous-bandes Fi du schéma 7-FR sont utilisées en permanence dans leurs faisceaux d'affectation mais à n'importe quel point de la couverture, le rapport C/I observé dans la sous-bande Fi sera supérieure au C/I observé dans la sous-bande F0 en raison d'un facteur de réutilisation plus faible pour F0. Le document EP2434578 divulgue un système de radiocommunications satellitaire multifaisceaux large bande à réutilisation de fréquences selon l'art antérieur. Le problème technique est d'augmenter pour une bande d'émission et une puissance bord du satellite fixées la capacité satellitaire ou la densité de capacité de la voie aller d'un système de radiocommunications satellitaire multifaisceaux qui utilise un schéma de réutilisation fractionnaire FFR ou complète de fréquences suivant lequel une sous-bande commune à tous les spots de réception est allouée à la zone interne de chaque spot d'émission.

De manière plus particulière, le problème technique est d'augmenter la surface de la zone interne de chaque spot d'émission sans diminuer le rapport signal sur interférence C/I ou pour une surface de la zone interne de chaque spot d'émission fixée augmenter le rapport signal sur interférence C/I.

A cet effet, l'invention a pour objet un système de radiocommunications satellitaire multifaisceaux large bande, configuré pour une réutilisation fractionnaire de fréquences d'une bande totale BT allouée à une voie aller, comprenant

.- un satellite ayant un système antennaire d'émission multifaisceaux, configuré pour couvrir une zone géographique de service, décomposée en une pluralité de spots émission, avec une première grille G1 de spots et une deuxième grille G2 de spots d'émission, les spots d'émission de la première grille G1 et les spots d'émission de la deuxième grille G2 étant positionnés et leur diagramme de rayonnement étant configurés de sorte qu'il existe des points d'intersection entre les contours iso roll-off d'un nombre entier m, supérieur ou égal à trois, de spots adjacents se recouvrant partiellement, le nombre m désignant l'ordre de multiplicité des points d'intersection ; et

.- un ensemble de terminaux récepteurs répartis sur l'ensemble des spots d'émission, chaque terminal récepteur comprenant un moyen de positionnement géographique et un moyen de réception suivant une ressource de transmission allouée ;

.- un planificateur et allocateur de ressources de transmission voie aller, réalisé sous la forme d'un ou plusieurs calculateurs électroniques, configuré pour attribuer à un terminal récepteur lorsqu'il le demande une ressource de transmission voie aller en termes d'une sous-bande de fréquence de la bande totale BT et d'un état de polarisation pris parmi un premier état de polarisation P1 et un deuxième état de polarisation P2 en fonction de la position géographique du terminal récepteur et d'un plan d'allocation de ressources de transmission voie aller suivant lequel,

chaque spot d'émission est constitué d'une zone interne centrale et d'une zone périphérique entourant la zone interne centrale; et

le premier état de polarisation et le deuxième état de polarisation sont respectivement alloués aux spots de la première grille G1 et aux spots de la deuxième grille G2 ; et une même bande principale BP de fréquences d'un seul tenant ou en plusieurs morceaux, formant une partie prépondérante de la bande totale BT en termes de bande occupée, est allouée en totalité à chaque zone interne centrale des spots des première et deuxième grilles ; et les fréquences de la bande totale BT qui ne font pas partie de la bande principale BP forment une bande secondaire BS d'un seul tenant ou en plusieurs morceaux qui se décompose en un nombre entier n, supérieur ou égal à 2, de sous-bandes secondaires d'un seul tenant chacune, séparées ou adjacentes, réparties sur l'ensemble des zones périphériques des spots d'émission suivant un schéma multicolore à n couleurs de sous-bandes secondaires, caractérisé en ce que les points d'intersection entre les spots des premières et deuxième grilles sont des points quadruples d'intersection c'est-à-dire ayant un ordre de multiplicité égal à 4.

Suivant des modes particuliers de réalisation, le système de radiocommunications satellitaire multifaisceaux comprend l'une ou plusieurs des caractéristiques suivantes :

.- les points quadruples définissent des surfaces utiles élémentaires de couverture à raison d'une par spot qui forment un pavage de la zone de couverture, et chaque surface utile élémentaire constitue une maille du pavage de même taille et de même forme, et la forme de la maille est un parallélogramme ;
.- la forme de la maille est un carré ou un rectangle ou un losange ;
.- chaque zone interne est inscrite dans la surface utile élémentaire de son spot d'émission ;
.- le nombre n de sous-bandes secondaires est un nombre entier compris dans l'ensemble des nombre 2, 3, 4, 7 et 12, et de préférence égal à 2;
.- les premier et deuxième états de polarisation (P1, P2) sont la polarisation circulaire gauche et la polarisation circulaire droite ou une première polarisation linéaire suivant un premier axe et une deuxième polarisation linéaire suivant un deuxième axe orthogonal au premier axe ;

.- le système antennaire d'émission multifaisceaux comporte des première et deuxième antennes d'émission à source unique par faisceau (SFPB) ; la première antenne comportant un premier réseau de sources réparties selon une maille de premier réseau carrée et un premier réflecteur principal ; la deuxième antenne comportant un deuxième réseau de sources réparties selon une maille de deuxième réseau carrée et un deuxième réflecteur principal ; et les premier et deuxième réseaux de sources ainsi que les premier et deuxième réflecteurs principaux sont géométriquement configurés de sorte à former une couverture de la zone de service à points quadruple et maille de couverture carrée ;

.- le système antennaire d'émission multifaisceaux comporte une unique antenne d'émission à plusieurs sources par faisceau (MFPB) ; et l'antenne d'émission comporte un réflecteur principal et un réseau de plusieurs sources illuminant le réflecteur, les sources étant réparties suivant une maille de réseau antenne hexagonale ou carrée et associées en plusieurs groupes décalés les uns par rapport aux autres selon des directions X et Y d'un plan, chaque source comportant un élément rayonnant lié à une chaîne hyperfréquence ; chaque source comporte un premier port et un deuxième port d'émission de même fréquence (F) et à polarisations (P1, P2) orthogonales entre elles ; les sources sont associées par groupes de quatre sources adjacentes selon des directions X et Y ; pour chaque groupe de quatre sources adjacentes, les premiers ports d'émission ou les deuxième ports d'émission correspondant à un même couple de valeur de fréquence et de polarisation (F, P1), (F, P2), sont reliés entre eux, les quatre ports d'émission reliés entre eux formant un faisceau d'émission ; pour la formation de chaque faisceau, les liaisons entre les ports d'émission d'un groupe de quatre sources sont réalisés par des circuits de distribution, les circuits de distribution dédiés à la formation de faisceaux différents étant indépendants entre eux ; le réseau de sources, le réflecteur et les circuits de distribution sont configurés en termes de géométrie et de connectivité, de sorte à former une couverture totale ou une demi-couverture de la zone de service par des spots émission répartis selon une maille de couverture comprise parmi les mailles rectangulaires, losanges et carrées ;
.- la maille du réseau des sources est une maille de réseau antenne hexagonale et l'ouverture rayonnante de l'élément rayonnant a une forme circulaire ou carrée ; et deux groupes consécutifs adjacents (Gr1, Gr2) selon la direction X sont espacées d'un premier pas L1 correspondant à une source selon la direction X et partagent une source en commun ; deux groupes consécutifs adjacents (Gr1, Gr3) selon la direction Y sont espacés d'un deuxième pas L2 correspondant à une source selon la direction Y et partage une source en commun ; chaque groupe de quatre sources formant un faisceau d'émission de forme sensiblement rectangulaire ou losange pour un réglage des circuits de distribution associées ;

.- la maille du réseau des sources est une maille de réseau antenne hexagonale et l'ouverture rayonnante de l'élément rayonnant a une forme circulaire ou carrée ; et deux groupes consécutifs adjacents (Grp1, Grp2) selon la direction X sont espacés d'un premier pas L1 correspondant à une source selon la direction X et partagent deux sources en commun ; et deux groupes consécutifs adjacents (Grp1, Grp3) selon la direction Y sont espacés d'un deuxième pas L2 correspondant à deux sources selon la direction Y et ne partagent aucune source en commun ; et chaque groupe de quatre sources forme un faisceau d'émission de forme sensiblement losange ou rectangulaire pour un réglage des circuits de distribution associées audit groupe ;

.- la maille du réseau des sources est une maille de réseau antenne carrée et l'ouverture rayonnante de l'élément rayonnant a une forme carrée ; et les deux directions X et Y forment un angle droit ; et deux groupes consécutifs adjacents (Gr1, Gr2) selon la direction X sont espacés d'un premier pas L1 correspondant à une source selon la direction X et partagent une source en commun ; et deux groupes consécutifs adjacents (Gr1, Gr3) selon la direction Y sont espacés d'un deuxième pas L2 correspondant à une source selon la direction Y et partagent une source en commun ; et chaque groupe de quatre sources forme un faisceau d'émission de forme sensiblement carrée pour un réglage des circuits de distribution associées audit groupe ; et le réseau de sources, le réflecteur et les circuits de distribution sont configurés en termes de géométrie et de connectivité, de sorte à former une couverture totale de la zone de service par des spots émission répartis selon une maille de couverture carrée ;

.- le système antennaire d'émission multifaisceaux comporte une première antenne d'émission et une deuxième antenne à plusieurs sources par faisceau (MFPB) ; et la première antenne d'émission comporte un premier réflecteur principal et un premier réseau de plusieurs sources illuminant le premier réflecteur principal ; la deuxième antenne d'émission comporte un deuxième réflecteur principal et un deuxième réseau de plusieurs sources illuminant le deuxième réflecteur principal ; les premier et deuxième réseaux ont une architecture identique selon la laquelle, les sources d'un réseau antenne sont réparties suivant une maille de réseau hexagonale associés en plusieurs groupes, décalés les uns par rapport aux autres selon des directions d'un plan X et Y, chaque source comportant un élément rayonnant lié à une chaîne hyperfréquence ; chaque source comporte un premier port et un deuxième port d'émission de même fréquence (F1) et à polarisations (P1, P2) orthogonales entre elles ; les sources sont associées par groupes de quatre sources adjacentes selon les directions X et Y ; pour chaque groupe de quatre sources adjacentes, les premiers ports d'émission correspondant à un même couple de valeur de fréquence et de polarisation (F1, P1), (F1, P2), sont reliés deux à deux selon la direction X puis deux à deux selon la direction Y, les quatre ports d'émission reliés entre eux formant un faisceau d'émission ; pour la formation de chaque faisceau, les liaisons entre les ports d'émission d'un groupe de quatre source sont réalisés par des circuits de distribution, les circuits de distribution dédiés à la formation de faisceaux différents étant indépendants entre eux ; les premier et deuxième réseaux de sources, les premier et deuxième réflecteurs principaux, et les circuits de distribution sont configurés en termes de géométrie et de connectivité, de sorte à former une couverture totale de la zone de service par des spots émission répartis selon une maille de couverture rectangulaire ou losange ;

.- la maille du premier réseau des sources et du deuxième réseau de sources est une maille de réseau antenne hexagonale et l'ouverture rayonnante de l'élément rayonnant de chaque source a une même forme circulaire ou carrée; et pour chaque réseau : deux groupes consécutifs adjacents (Grp1, Grp2) selon la direction X sont espacées d'un premier pas L1 correspondant à une source selon la direction X et partagent deux sources en commun; deux groupes consécutifs adjacents (Grp1, Grp3) selon la direction Y sont espacés d'un deuxième pas L2 correspondant à deux sources selon la direction Y et ne partagent aucune source en commun ; chaque groupe de quatre sources formant un faisceau d'émission de forme sensiblement losange pour un réglage des circuits de distribution associées.

.- la maille du premier réseau des sources et du deuxième réseau de sources est une maille de réseau antenne hexagonale et l'ouverture rayonnante de l'élément rayonnant de chaque source a une même forme circulaire ou carrée; et pour chaque réseau : deux groupes consécutifs adjacents (Gr1, Gr2) selon la direction X sont espacés d'un premier pas L1 correspondant à une source selon la direction X et partagent une source en commun; et deux groupes consécutifs adjacents (Gr1, Gr3) selon la direction Y sont espacés d'un deuxième pas L2 correspondant à une source selon la direction Y et partagent une source en commun ; et

chaque groupe de quatre sources forme un faisceau d'émission de forme sensiblement rectangulaire pour un réglage des circuits de distribution associées audit groupe ;

.- le satellite est configuré pour rayonner dans chaque spot et sur toute son étendue incluant sa zone centrale et sa zone périphérique, une couleur de ressources de transmission émise, formée de la bande de fréquence principale, de la bande secondaire et de l'état de polarisation alloués audit spot par le plan de fréquences et des états de polarisation ;

.- le système de radiocommunications satellitaire comprend en outre un système automatique de correction du dépointage de l'antenne causé notamment par des variations d'attitude de la plateforme du satellite ;

.- le système de radiocommunications satellitaire comprend en outre un ensemble de terminaux récepteurs répartis sur l'ensemble des spots, et chaque terminal comprend un moyen de positionnement géographique suffisamment précis pour déterminer dans quel spot d'émission il se trouve, et s'il se trouve dans une zone interne ou dans un zone périphérique dudit spot d'émission ;

.- le planificateur et allocateur de ressources de transmission voie aller est réparti sur l'ensemble des terminaux et/ou d'une ou plusieurs stations auxiliaires ou est en centralisé dans une station de contrôle des ressources et de leur planification ;

.- la taille de la zone centrale varie en fonction du spot d'émission et du temps, ou la taille de la zone centrale varie en fonction du spot d'émission et est indépendante du temps ou, la taille de la zone centrale est constante indépendamment du spot d'émission et du temps ;

.- le système de radiocommunications satellitaire multifaisceaux défini ci-dessus est configuré pour une émission de la voie aller par le satellite dans une bande comprise dans l'ensemble des bandes C, X, Ku, Ka, L, S, Q et V.

L'invention a également pout objet un procédé de réutilisation fractionnaire de fréquences d'une bande totale allouée à une voie aller dans un système de radiocommunication satellitaire multifaisceaux large bande, le système comprenant :

.- un satellite ayant un système antennaire d'émission multifaisceaux configuré pour couvrir une zone géographique de service, décomposée en une pluralité de spots émission, avec une première grille G1 de spots et une deuxième grille G2 de spots d'émission, les spots d'émission de la première grille G1 et les spots d'émission de la deuxième grille G2 étant positionnés et leur diagramme de rayonnement étant configurés de sorte qu'il existe des points d'intersection entre les contours iso roll-off d'un nombre entier m, supérieur ou égal à trois, de spots adjacents se recouvrant partiellement, le nombre m désignant l'ordre de multiplicité des points d'intersection ; et

.- un ensemble de terminaux récepteurs répartis sur l'ensemble des spots d'émission, chaque terminal récepteur comprenant un moyen de positionnement géographique et un moyen de réception suivant une ressource de transmission allouée ; et

.- un planificateur et allocateur de ressources de transmission voie aller, réalisé sous la forme d'un ou plusieurs calculateurs électroniques ;

le procédé comprenant les étapes consistant à :

.- déterminer un plan d'allocation de ressources de transmission voie aller suivant lequel, chaque spot d'émission est constitué d'une zone interne centrale et d'une zone périphérique entourant la zone interne centrale; et le premier état de polarisation et le deuxième état de polarisation sont respectivement alloués aux spots de la première grille G1 et aux spots de la deuxième grille G2 ; et une même bande principale BP de fréquences d'un seul tenant ou en plusieurs morceaux, formant une partie prépondérante de la bande totale BT en termes de bande occupée, est allouée en totalité à chaque zone interne centrale des spots des première et deuxième grilles ; et les fréquences de la bande totale BT qui ne font pas partie de la bande principale BP forment une bande secondaire BS d'un seul tenant ou en plusieurs morceaux qui se décompose en un nombre entier n, supérieur ou égal à 2, de sous-bandes secondaires d'un seul tenant chacune, séparées ou adjacentes, réparties sur l'ensemble des zones périphériques des spots d'émission suivant un schéma multicolore à n couleurs de sous-bandes secondaires ;

.- attribuer à un terminal récepteur lorsqu'il le demande une ressource de transmission voie aller en termes d'une sous-bande de fréquence de la bande totale BT et d'un état de polarisation pris parmi un premier état de polarisation P1 et un deuxième état de polarisation P2 en fonction de la position géographique du terminal récepteur ; le procédé étant caractérisé en ce que les points d'intersection entre les spots des premières et deuxième grilles sont des points quadruples, c'est-à-dire ayant un ordre de multiplicité égal à 4 ; et les points quadruples définissent des surfaces utiles élémentaires de couverture à raison d'une par spot qui forment un pavage de la zone de couverture ; et chaque surface utile élémentaire constitue une maille du pavage ayant la forme d'un parallélogramme ; et chaque zone interne est inscrite dans une surface utile élémentaire.

Suivant des modes particuliers de réalisation, le procédé de réutilisation fractionnaire de fréquences comprend l'une ou plusieurs des caractéristiques suivantes :

.- le procédé de réutilisation de fréquences comprenant en outre les étapes consistant à: pour chaque terminal qui souhaite disposer d'une ressource de transmission, déterminer dans quel spot d'émission il se trouve et s'il se trouve dans une zone interne ou une dans une zone périphérique, puis lorsque le terminal se trouve dans une zone interne, allouer au terminal une ressource de transmission de la bande principale et de l'état de polarisation qui ont été attribués à la zone interne du spot d'émission dans lequel le terminal se trouve, ou lorsque le terminal se trouve dans une zone périphérique, allouer au terminal une ressource de transmission de la sous-bande auxiliaire et l'état de polarisation qui ont été attribués à la zone périphérique du spot d'émission dans lequel le terminal se trouve ;

.- la taille de la zone centrale varie en fonction du spot d'émission et du temps, ou la taille de la zone centrale varie en fonction du spot d'émission et est indépendante du temps ou, la taille de la zone centrale est constante indépendamment du spot d'émission et du temps.

L'invention sera mieux comprise à la lecture de la description de plusieurs formes de réalisation qui va suivre, donnée uniquement à titre d'exemple et faite en se référant aux dessins sur lesquels :

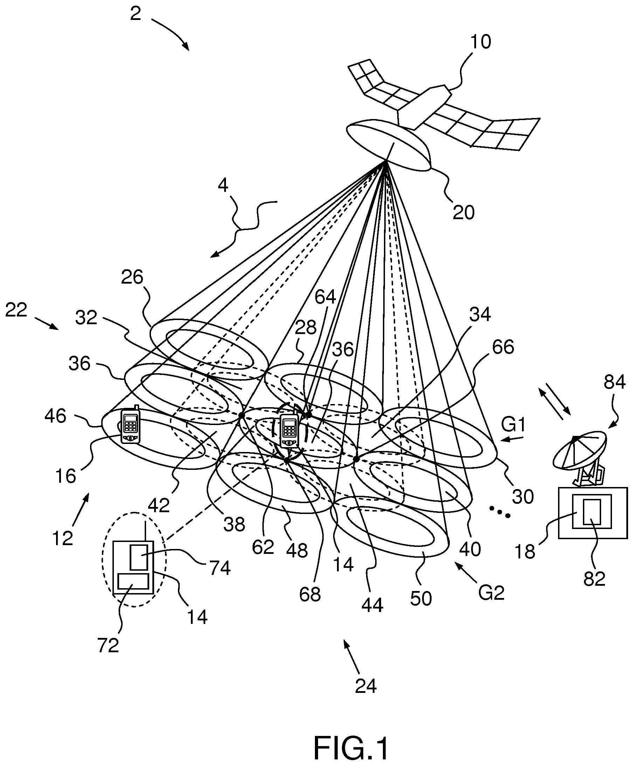

- la Figure 1 est une vue d'un système de radiocommunications satellitaire, configuré pour une réutilisation de fréquences et de deux états de polarisation selon l'invention ;

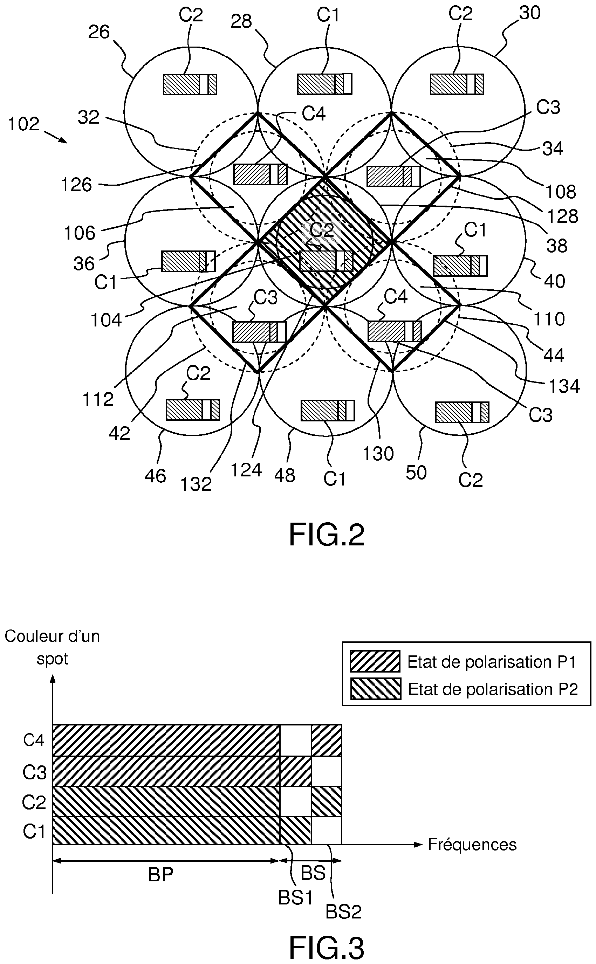

- La Figure 2 est une vue d'un schéma de réutilisation géographique de fréquences et de polarisations suivant un premier mode de réalisation de l'invention dans lequel une couverture à points quadruples et maille carrée de spots d'émission à contours de roll off circulaires est réalisée ;
- La Figure 3 est une vue synthétique des couleurs de ressources de transmission pouvant être émises par spot à raison d'une couleur par spot suivant le plan de fréquences et de polarisations de la Figure 2, une couleur de ressources de transmission étant l'association d'un état de polarisation et d'une bande de fréquence composé d'une même bande principale et d'une sous-bande bande secondaire ;

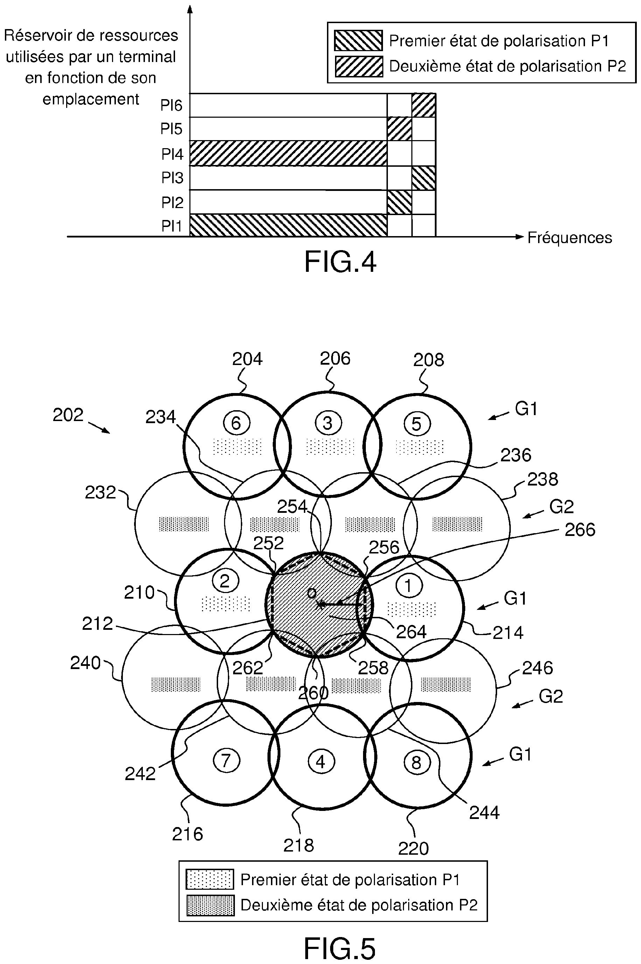

- La Figure 4 est une vue synthétique des configurations de ressources de transmission utilisables par un terminal de réception suivant le plan de fréquences et de polarisations de la Figure 2, une configuration de ressources de transmission utilisables par le terminal étant l'association d'un état de polarisation et d'une bande de fréquences parmi la bande principales et les bandes secondaires.
- la Figure 5 est une vue d'un schéma classique de réutilisation géographique d'une même bande principale de fréquences et de deux états de polarisation par les spots d'émission du satellite, utilisant une maille de couverture hexagonale des spots d'émission, et servant de référence dans l'évaluation des performances de transmission d'un schéma de réutilisation géographique de la même bande principale de fréquences et des deux états de polarisation par les spots d'émission du satellite, lorsque la maille de couverture des spots d'émission utilisée est un parallélogramme ;

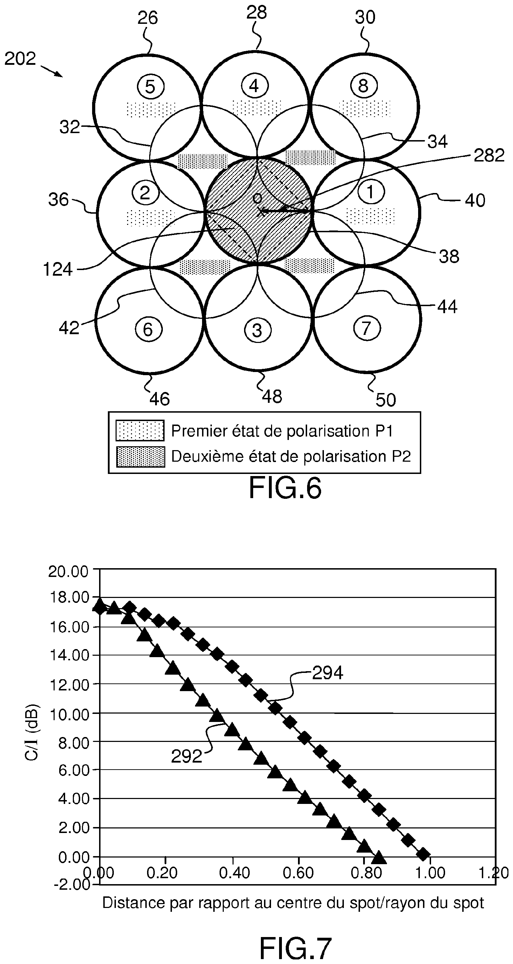

- La Figure 6 est une vue d'un schéma de réutilisation géographique d'une même bande principale de fréquences et de deux états de polarisation par les spots d'émission du satellite, dans lequel la maille de couverture des spots d'émission utilisée est carrée, et qui correspond à la couverture d'émission satellite et au plan d'allocation géographique des ressources de transmission par le système du premier mode de réalisation du système ;
- La Figure 7 est une vue de la comparaison des performances en termes de C/I du schéma de réutilisation de la bande principale et des deux états de polarisation à angle d'ouverture des spots identique, entre la configuration du premier mode de réalisation du système de l'invention dans laquelle la surface utile centrale du spot d'émission ou la maille de couverture est carrée (Figure 6) et la configuration de référence dans laquelle la surface utile centrale du spot d'émission ou la maille de couverture est hexagonale (Figure 5), l'angle d'ouverture des spots étant identiques.

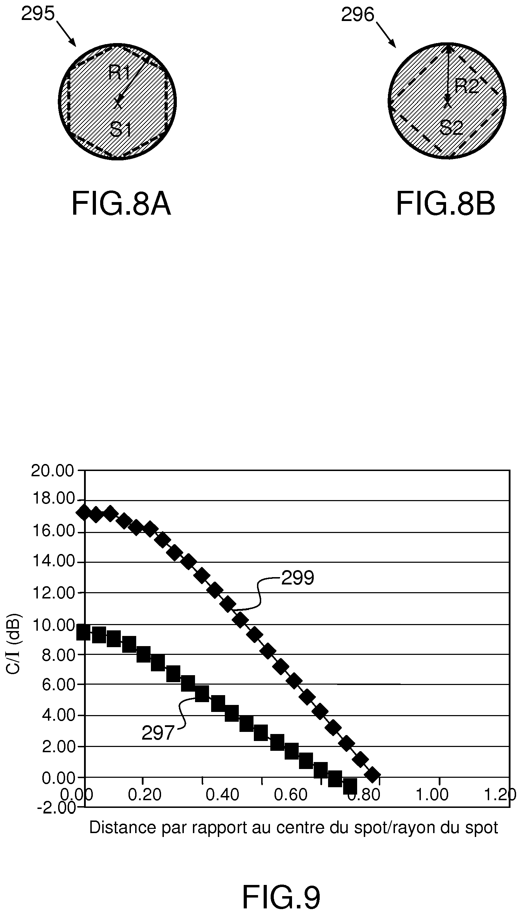

- Les Figures 8A et 8B décrivent respectivement la géométrie d'une maille de couverture hexagonale et la géométrie d'une maille de couverture carré, les mailles étant inscrite dans un spot d'émission d'ouverture circulaire fixé ;
- La Figure 9 est une vue de la comparaison des performances en termes de C/I du schéma de réutilisation de la bande principale et des deux états de polarisation à aire de surface utile identique entre la configuration du premier mode de réalisation du système de l'invention dans laquelle la surface utile centrale du spot d'émission ou la maille de couverture est carrée et la configuration de référence dans laquelle la surface utile centrale du spot d'émission ou la maille de couverture est hexagonale, les aires des surfaces utiles élémentaires étant identiques ;.

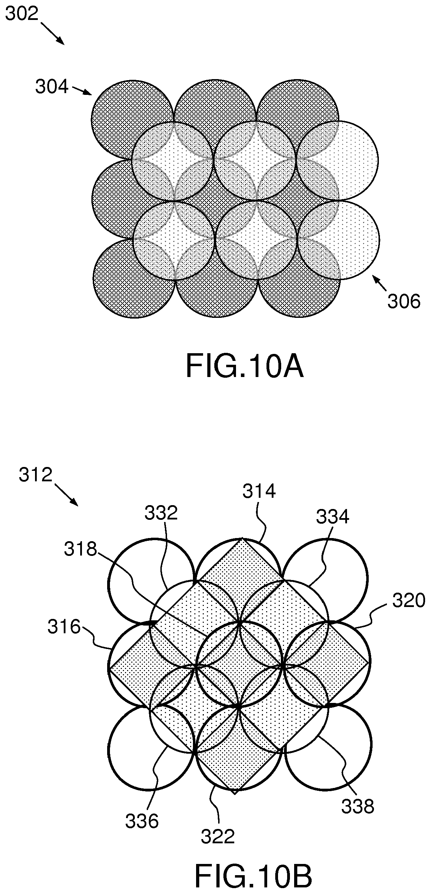

- La Figure 10A est une vue superposée d'un premier réseau de sources d'une première d'antenne SFPB (Single Feed Per Beam) et d'un deuxième réseau de sources d'une deuxième antenne SFPB, décalée par rapport à la première dans un même plan image, cette configuration d'antenne mettant en oeuvre le premier mode de réalisation du système de la figure 2 ;
- La Figure 10B est une vue de la couverture colorée optimale en termes de C/I du premier mode de réalisation du système de la figure 2 et réalisée par la configuration d'antenne de la Figure 10A ;

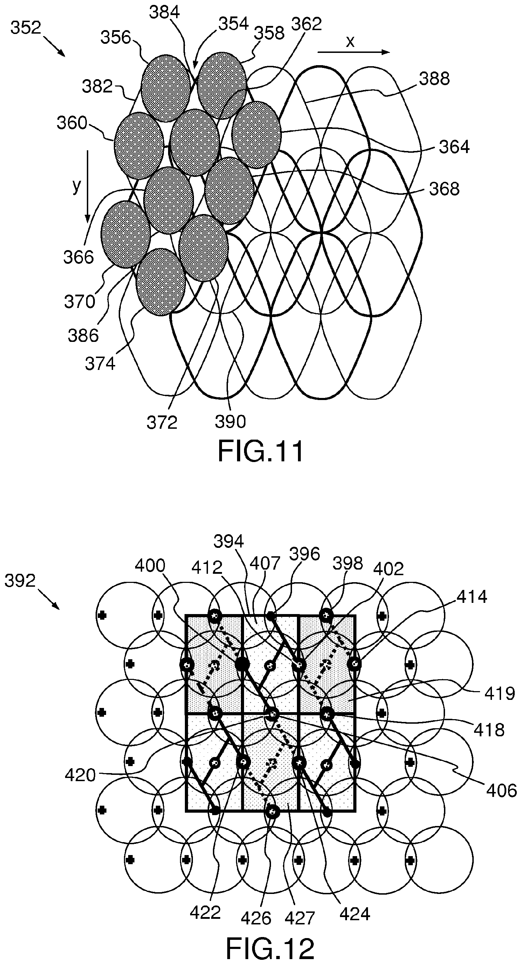

- La Figure 11 est une vue d'une première configuration d'une antenne MFPB à maille de réseau hexagonale et plus particulièrement de son réseau de sources et de ses groupement en quadri-sources, connectés de manière idoine de sorte à réaliser un deuxième mode de réalisation d'un système selon l'invention dans lequel la maille de couverture est rectangulaire;

- La Figure 12 est une vue d'un schéma des connexions de premiers ports entre eux et de deuxièmes ports entre eux au sein de chaque groupement quadri-sources de la Figure 11 permettant de réaliser la couverture colorée en termes d'états de polarisation à maille rectangulaire du deuxième mode de réalisation d'un système selon l'invention ;

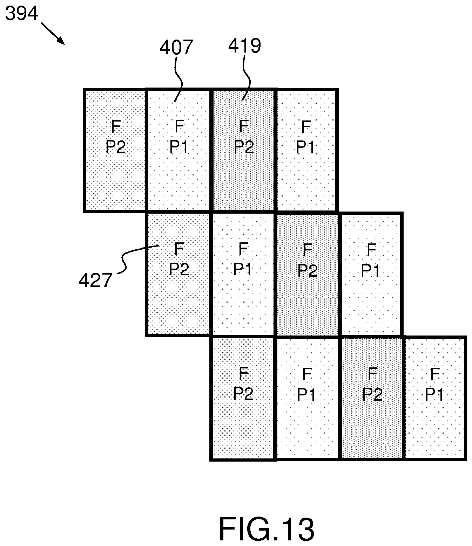

- La Figure 13 est une couverture colorée en termes d'états de polarisation à maille rectangulaire du deuxième mode de réalisation d'un système selon l'invention mis en oeuvre par la configuration de l'antenne MFPB décrite dans les Figures 11 et 12 ;

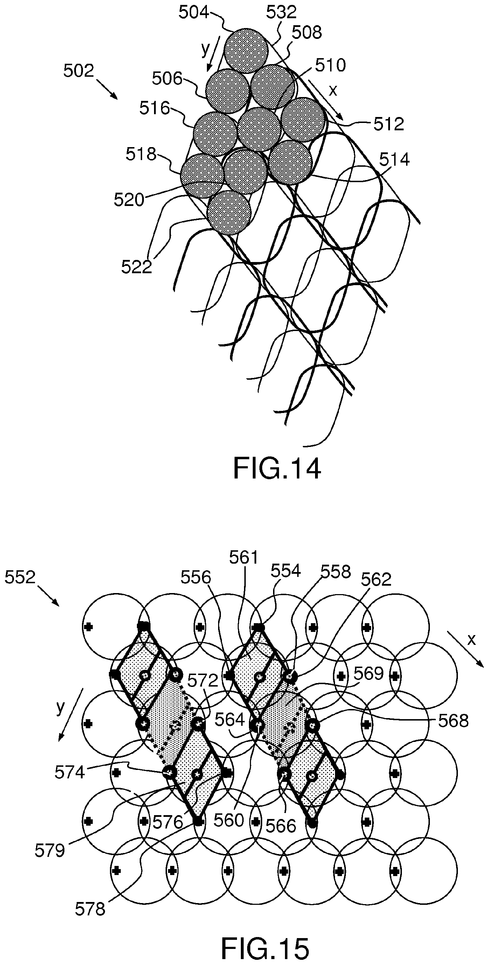

- La Figure 14 est une vue d'une deuxième configuration d'une antenne MFPB à maille de réseau hexagonale et plus particulièrement de son réseau de sources et de ses groupement en quadri-sources, connectés de manière idoine de sorte à réaliser un troisième mode de réalisation d'un système selon l'invention dans lequel la maille de couverture est losange;
- La Figure 15 est une vue d'un schéma des connexions de premiers ports entre eux et de deuxièmes ports entre eux au sein de chaque groupement quadri-sources de la Figure 14 permettant de réaliser une demi-couverture de la couverture colorée en termes d'états de polarisation à maille losange du troisième mode de réalisation du système selon l'invention ;

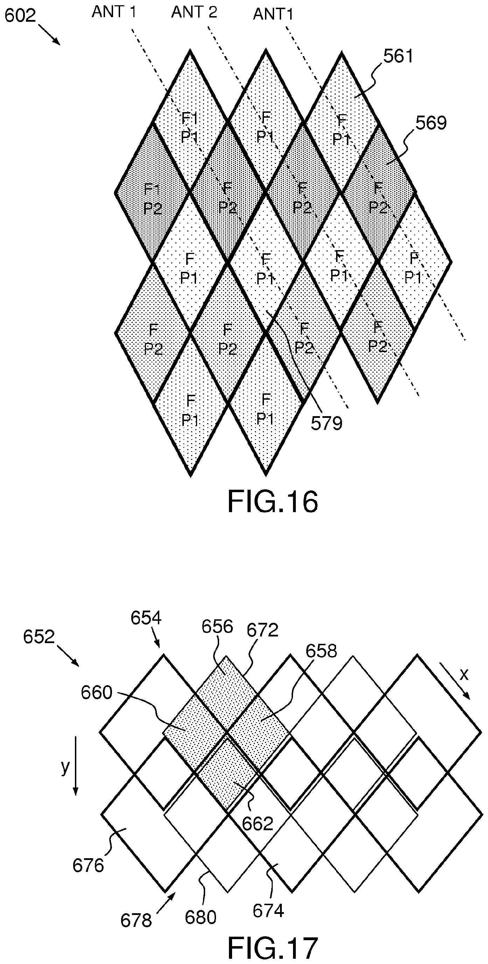

- La Figure 16 est une couverture colorée en termes d'états de polarisation à maille losange du troisième mode de réalisation d'un système selon l'invention mis en oeuvre par deux antennes MFPB décalées entre elles et ayant une configuration telle que décrite dans les Figures 14 et 15 ;
- La Figure 17 est une vue d'une troisième configuration d'une antenne MFPB à maille de réseau carrée et plus particulièrement de son réseau de sources et de ses groupement en quadri-sources, connectés de manière idoine de sorte à réaliser un quatrième mode de réalisation d'un système selon l'invention dans lequel la maille de couverture est carrée;

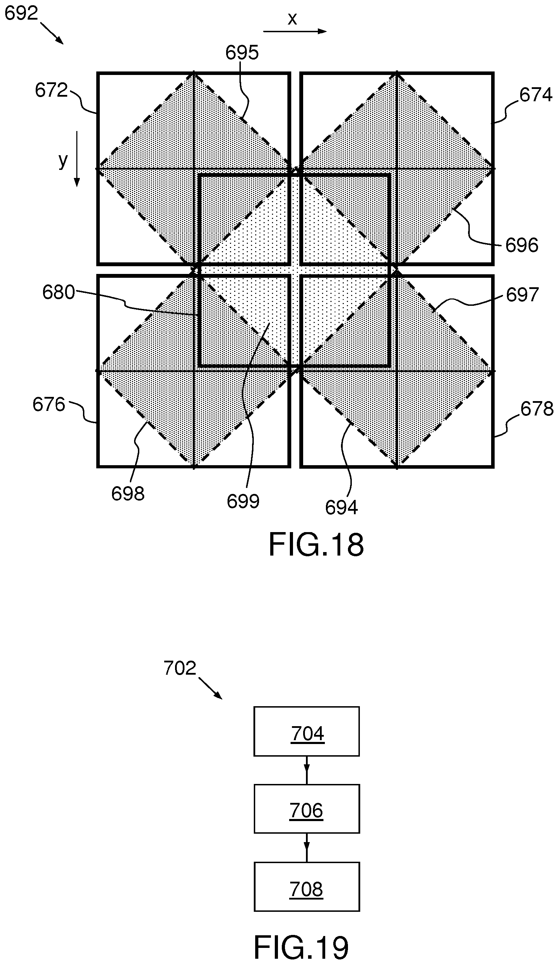

- La Figure 18 est une couverture colorée en termes d'états de polarisation à maille carrée du quatrième mode de réalisation du système selon l'invention mis en oeuvre par la troisième configuration de l'antenne MFPB décrite dans la Figure 17 ;
- la Figure 19 est un ordinogramme d'un procédé de réutilisation de fréquences et de polarisations à deux états mis en oeuvre par les différents modes de réalisation du système selon l'invention.

En préambule, quelques termes utilisés dans la suite du texte sont définis.
Par « antenne » on entend un ensemble composé d'un réflecteur principal, dimensionné par l'homme de l'art selon des critères relatifs aux faisceaux à générer sur une couverture de service et associé ou non à un ou des réflecteurs secondaires ainsi qu'un ensemble de sources agencées suivant un réseau plan dont l'image de rayonnement via l'ensemble du ou des réflecteurs génère une grille de faisceaux assurant toute ou partie du recouvrement de la zone d'émission.
Par « spot d'émission » on entend un faisceau de rayonnement radioélectrique émis par une antenne suivant la voie aller du satellite ou l'empreinte de ce faisceau sur le sol terrestre, le faisceau pouvant être généré par une seule source dans le cas d'une antenne SFPB ou généré par plusieurs sources, regroupées entre elles en un groupement de sources pourvu d'un réseau de formation du faisceau (BFN), dans le cas d'une antenne MFPB. Un spot d'émission est caractérisé au sol par son centre suivant lequel la directivité est maximale et un contour iso-roll-off à une valeur d'atténuation prédéterminée.
Par « maille de couverture » on entend un motif géométrique polygonal formé en reliant les points multiples immédiats entourant le centre de chaque spot d'émission. Pour chaque spot d'émission, la maille de couverture définit une surface utile du spot dans laquelle est inscrite la zone interne du spot d'émission.
Par « maille de réseau » on entend un motif géométrique décrivant la position des sources d'un réseau d'une antenne, ou plus précisément le motif établi en reliant les centres des sources du réseau.
Suivant la Figure 1, un système 2 de radiocommunications satellitaire multifaisceaux large bande est configuré pour implémenter une réutilisation complète ou fractionnaire de fréquences d'une bande totale BT allouée à une voie aller 4.
Le système 2 de radiocommunications satellitaire comprend un satellite 10, un ensemble 12 de terminaux émetteurs 14, 16, et un planificateur et allocateur de ressources de transmission en voie aller 18.
Le satellite 10 comporte un système antennaire d'émission multifaisceaux 20, configuré pour couvrir une zone géographique de service ou couverture de service 22, décomposée en une pluralité 24 de spots émission 26, 28, 30, 32, 34, 36, 38, 40, 42, 44, 46, 48, 50.
Suivant la Figure 1 et à titre d'exemple illustratif, l'ensemble 24 des spots d'émission de la couverture terrestre comporte treize spots d'émission 26, 28, 30, 32, 34, 36, 38, 40, 42, 44, 46, 48, 50 avec le spot d'émission 38 choisi arbitrairement pour le test par la suite des performances en C/I du système 2.
Les spots d'émission 26, 28, 30, 36, 38 40, 46, 48, 50, tracés en traits pleins, forment une première grille G1 de spots d'émission tandis que les spots d'émission 32, 34, 42, 44, tracés en traits pointillés, forment une deuxième grille G2 de spots d'émission.
Les spots d'émission de la première grille G2 et les spots d'émission de la deuxième grille G2 sont positionnés globalement et leur diagramme de rayonnement sont configurés de sorte qu'il existe des points d'intersection entre les contours iso roll-off d'un nombre entier $m$ égal à 4, de spots d'émission adjacents se recouvrant partiellement, le nombre $m$ désignant l'ordre de multiplicité des points d'intersection.

Ici, sur la Figure 1 seuls sont représentés les points quadruples 62, 64, 66, 68 du spot de test 38, le point 62 étant le point d'intersection des contours des spots 32, 36, 38, 42, le point 64 étant le point d'intersection des contours des spots 28, 32, 34, 38, le point 66 étant le point d'intersection des contours des spots 34, 38, 40, 44 et le point 68 étant le point d'intersection des contours des spots 38, 42, 44, 48.

Les points quadruples définissent des surfaces utiles élémentaires de couverture à raison d'une par spot d'émission qui forment un pavage de la zone géographique de service 22, et chaque surface utile élémentaire constitue une maille du pavage de même taille et de même forme, la forme de la maille étant de manière générale celle d'un parallélogramme.

Suivant la Figure 1 et à titre d'exemple la maille de couverture est carrée.

Les terminaux récepteurs 14, 16 de l'ensemble 12, deux d'entre eux seulement étant représentés sur la Figure 1 par souci de simplification, sont répartis sur l'ensemble 24 des spots d'émission, ici le spot de test 38 et le spot 46.

Chaque terminal récepteur 14, 16, comprend un moyen de positionnement géographique ou de géolocalisation 72 et un moyen de réception 74 suivant une ressource de transmission voie aller.

Le planificateur et allocateur de ressources de transmission voie aller 18, réalisé sous la forme d'un ou plusieurs calculateurs électroniques 82, est configuré pour attribuer à un terminal récepteur lorsqu'il le demande, par exemple le terminal récepteur 14, une ressource de transmission voie aller, de manière générale une sous-bande de fréquence dans la bande totale BT et un état de polarisation parmi un premier état de polarisation P1 et un deuxième état de polarisation P2, en fonction de la position géographique du terminal récepteur, déterminée par le moyen de positionnement géographique 72, et d'un plan d'allocation de ressources de transmission qui réutilise complètement ou de manière fractionnaire les fréquences de la bande totale allouée BT à la voie aller 4.

Ici, le planificateur et allocateur de ressources de transmission voie aller 18 est centralisé dans une station 84 de contrôle des ressources et de leur planification.

En variante, le planificateur et allocateur de ressources de transmission voie aller est réparti sur l'ensemble des terminaux et/ou d'une ou plusieurs stations auxiliaires.

Suivant la Figure 2 et un premier mode de réalisation d'un plan 102 de réutilisation des fréquences et des états de polarisation de la voie aller 4 selon l'invention, correspondant à un premier mode de réalisation du système 2, chaque spot d'émission est constitué d'une zone interne centrale d'un seul tenant et d'une zone périphérique en un ou plusieurs morceaux entourant la zone interne centrale.

Ici sur la Figure 2, seules sont représentées sous la forme de disques les zones internes centrales 104, 106, 108, 110, 112 des spots démissions 38, 32, 34, 42, 44.

De manière générale, la zone interne centrale de chaque spot d'émission est inscrite dans la surface utile élémentaire de couverture dudit spot de la forme d'un parallélogramme.

Ici sur la Figure 2, seules les surfaces utiles de forme carrée des spots d'émission 104, 106, 108, 110, 112 sont représentées et désignées respectivement par les références numériques 124, 126, 128, 130, 132. Globalement, les surfaces utiles 124, 126, 128, 130, 132 des spots d'émission 104, 106, 108, 110, 112 forment une croix 134 dont les bras sont disposés en diagonale sur la Figure 2. Les zones internes centrales 104, 106, 110, 112 sont inscrites respectivement dans les surfaces utiles 124, 126, 128, 130, 132.

Pour chaque spot d'émission, la zone périphérique est la zone complémentaire de la zone centrale dudit spot par rapport à sa surface utile élémentaire. Ici, sur la Figure 2 et à titre d'exemple, la zone périphérique d'un spot d'émission est formée de quatre surfaces de coin disjointes de la surface utile élémentaire du spot d'émission.

Suivant le plan 102 d'allocation des ressources de transmission, une même bande principale BP de fréquences, ici d'un seul tenant et formant une partie de la bande totale BT en début de bande, est allouée en totalité à chaque zone interne centrale des spots d'émission, notamment aux zones centrales 104 108, 110, 112, 114, 116, 118.

De manière générale, une même bande principale BP de fréquences d'un seul tenant ou en plusieurs morceaux, formant une partie prépondérante de la bande totale BT en termes de bande occupée, est allouée en totalité à chaque zone interne centrale des spots des première et deuxième grilles G1, G2.

Les fréquences de la bande totale BT qui ne font pas partie de la bande principale BP forment une bande secondaire BS d'un seul tenant ou en plusieurs morceaux qui se décompose en un nombre entier n, supérieur ou égal à 2, de sous-bandes secondaires d'un seul tenant chacune, séparées ou adjacentes, réparties sur l'ensemble des zones périphériques des spots d'émission suivant un schéma multicolore à n couleurs de sous-bandes secondaires.

Ici sur la Figure 2 et à titre d'exemple, le nombre n de sous-bandes secondaires est égal à 2 et la bande secondaire BS se décompose en une première sous-bande secondaire BS1 et une deuxième sous-bande secondaire BS2.

Indépendamment des bandes de fréquences allouées à chacun des spots, le premier état de polarisation P1 et le deuxième état de polarisation P2 sont respectivement alloués aux spots de la première grille et aux spots de la deuxième grille.

Suivant la Figure 3, les couleurs de ressources de transmission pouvant être émises par spot à raison d'une couleur par spot, suivant le plan de fréquences et de polarisations 102 de la Figure 2 sont codifiés par des bandeaux de couleurs C1, C2, C3 et C4 dans lesquels un premier motif hachuré vers la droite vers le bas de la Figure correspond à émission dans le premier état de polarisation P1 tandis qu'un deuxième motif hachuré vers la gauche vers le bas de la Figure correspond à émission dans le deuxième état de polarisation P2.

La première couleur C1 est une émission de rayonnement électromagnétique dans la bande principale BP et dans la première bande secondaire BS1, associées au premier état de polarisation P1. La deuxième couleur C2 est une émission de rayonnement électromagnétique dans la bande principale BP et dans la deuxième bande secondaire BS2, associées au premier état de polarisation P1. La troisième couleur C3 est une émission de rayonnement électromagnétique dans la bande principale BP et dans la première bande secondaire BS1, associées au deuxième état de polarisation P2. La quatrième couleur C4 est une émission de rayonnement électromagnétique dans la bande principale BP et dans la deuxième bande secondaire BS2, associées au deuxième état de polarisation P2.

Suivant la Figure 2, les couleurs de rayonnement C1 et C2 sont respectivement attribuées au premier groupe de spots 28, 36, 40, 48 et au deuxième groupe de spots 26, 30, 38, 46, 50 de la première grille G1 tandis que les couleurs de rayonnement C3 et C4 sont respectivement attribuées à au troisième groupe de spots 34, 42 et au quatrième groupe de spots 32, 44 de la deuxième grille G2.

De manière préférée, le deuxième nombre n̲ de sous-bandes secondaires est un nombre entier compris dans l'ensemble des nombre 3, 4, 7 et 12.

Les premier et deuxième états de polarisation P1, P2 sont la polarisation circulaire gauche et la polarisation circulaire droite ou une première polarisation linéaire suivant un premier axe et une deuxième polarisation linéaire suivant un deuxième axe orthogonal au premier axe.

Suivant la Figure 4, les différentes réserves planifiées de ressources attribuables à un terminal en fonction de son emplacement géographique suivant le plan de fréquences et de polarisations de la Figure 2 sont codifiées par des bandeaux de réserves de transmission P11, P12, P13, P14, P15, P16.

Lorsque le terminal récepteur se trouve dans une zone interne centrale d'un spot d'émission de couleur C1 ou C2, lui sera attribuée une ressource de transmission du réservoir P11, constitué de la bande de fréquence principale BP associée au premier état de polarisation P1.

Lorsque le terminal récepteur se trouve dans une zone périphérique d'un spot d'émission de couleur C1, lui sera attribuée une ressource de transmission du réservoir P12, constitué de la première bande de fréquences secondaires BS1 associée au premier état de polarisation P1.

Lorsque le terminal récepteur se trouve dans une zone périphérique d'un spot d'émission de couleur C2, lui sera attribuée une ressource de transmission du réservoir P13, constitué de la deuxième bande de fréquences secondaires BS2 associée au premier état de polarisation P1.

Lorsque le terminal récepteur se trouve dans une zone interne centrale d'un spot d'émission de couleur C3 ou C4, lui sera attribuée une ressource de transmission du réservoir P14, constitué de la bande de fréquence principale BP associée au deuxième état de polarisation P2.

Lorsque le terminal récepteur se trouve dans une zone périphérique d'un spot d'émission de couleur C3, lui sera attribuée une ressource de transmission du réservoir P15, constitué de la première bande de fréquences secondaires BS1 associée au deuxième état de polarisation P2.

Lorsque le terminal récepteur se trouve dans une zone périphérique d'un spot d'émission de couleur C4, lui sera attribuée une ressource de transmission du réservoir P16 constitué de la deuxième bande de fréquences secondaires BS2 associée au deuxième état de polarisation P2.

Suivant la Figure 5, une configuration de référence d'un plan d'allocation de ressources 202 faisant partie de l'état de la technique est illustrée afin de mettre en évidence l'amélioration de la capacité de transmission apportée au système par l'utilisation du plan de réutilisation de fréquences et de polarisations 102 de la Figure 2.

Le plan d'allocation de ressources 202 est une réutilisation géographique classique d'une même bande principale de fréquences et de deux états de polarisation par les spots d'émission du satellite. La couverture utilise une première grille G1 de spots d'émission 204, 206, 208, 210, 212, 214, 216, 218, 220 à un premier état de polarisation P1 et une deuxième grille G2 de spots d'émission 232, 234, 236, 238, 240, 242, 244, 246 à un deuxième état de polarisation P2. Les grilles de spots G1 et G2 sont décalées entre elles de sorte à couvrir de manière optimale la zone géographique de service 22. Ainsi les centres des spots de la grille G2 sont positionnés dans les trous de la couverture réalisée par les spots de la première grille G1.

Les points triples d'un spot quelconque, en particulier les points triples 252, 254, 256, 258, 260, 262 du spot d'émission 212 choisi ici par exemple comme spot de référence, définissent une surface utile élémentaire 264 ou maille de couverture de forme hexagonale.

Ainsi, le plan d'allocation 202 de ressources de transmission servant de référence diffère du plan 102 de réutilisation de la bande principale et des deux états de polarisation de la Figure 2 en ce que la couverture réalisée est une couverture à points triples utilisant une maille de couverture hexagonale.

L'évaluation de la performance en C/I sera effectué le long d'un segment 266 de parcours horizontal sur la Figure 5 de la surface utile élémentaire 264 depuis le centre O du spot 212 jusqu'au bord de la surface utile élémentaire 264.

Les sources d'interférences prises en compte dans le calcul du C/I sont les spots d'émission 214, 210, 206, 218, 208, 204, 216, 220, numérotés de 1 à 8 suivant un ordre de degré de contribution décroissant. Ainsi les contributions en termes d'interférence des spots 214, 210 sont prépondérantes devant celles des spots 206, 218 et encore plus devant celles des spots 208, 204, 216, 220.

Suivant la Figure 6, le plan de réutilisation de fréquences et de polarisations 102 de la Figure 2 est rappelé en décrivant le segment de parcours horizontal 282 le long duquel est évaluée performance en C/I dans la surface utile élémentaire 124 de forme carrée et en indiquant les sources d'interférences prises en compte pour le calcul du C/I.

Le segment de parcours 282 part depuis le centre O du spot 38 jusqu'au bord de la surface utile élémentaire 124.

Les sources d'interférences prises en compte dans le calcul du C/I sont les spots d'émission 40, 36, 48, 28, 26, 46, 50, 30, numérotés de 1 à 8 suivant un ordre de degré de contribution décroissant. Ainsi les contributions en termes d'interférence des spots 40, 36 sont prépondérantes devant celles des spots 28, 48 et encore plus devant celles des spots 26, 46, 50,30.

Suivant la Figure 7, les performances en C/I du schéma de réutilisation de fréquences et polarisations 102 de la Figure 2 ou 6 selon l'invention à points quadruples et maille de couverture carrée, et les performances du schéma classique servant de référence de réutilisation de fréquences et polarisations 202 de la Figure 5 à points triples et maille de couverture hexagonale sont comparées.

Les schémas 102 et 202 utilisent ici chacun une paire différente d'antennes à une source par faisceau (SFPB) dont les sources ont un même diagramme de rayonnement et en particulier une même ouverture, ici égale à 0,45 degrés.

Une première courbe 292 représente l'évolution du C/I, observé dans le cas du plan de réutilisation 202 de la Figure 5 et d'une couverture à points triples et maille de couverture hexagonale pour un mobile se déplaçant le long du segment 266, en fonction de la distance du mobile par rapport au centre du spot 212, normalisée par rapport au rayon du spot 212.

Une deuxième courbe 294 représente l'évolution du C/I, observé dans le cas du plan 102 de la Figure 6 et d'une couverture à points quadruples et maille de couverture carrée pour un mobile se déplaçant le long du segment 282, en fonction de la distance du mobile par rapport au centre du spot 38, normalisée par rapport au rayon du spot 38.

La comparaison des courbes 294 et 292 montre une amélioration du C/I sur la quasi-totalité de la surface utile élémentaire comprise entre 3 et 4dB lorsqu'on passe d'une couverture à points triples et maille de couverture hexagonale à une couverture à points quadruples et maille de couverture carrée.

Ce résultat est généralisable à une couverture à points quadruples et maille de couverture de la forme d'un parallélogramme.

Suivant les Figures 8A et 8B, la géométrie d'une maille de couverture hexagonale et la géométrie d'une maille de couverture carrée sont représentées, les mailles étant inscrite dans un spot d'émission d'ouverture fixé de rayon R1 pour la maille de couverture hexagonale et de rayon R2 pour la maille de couverture carrée.

La surface utile S1 dans le cas d'un maillage à points triples et une maille hexagonale inscrite dans un spot de rayon R1 est exprimée par l'équation :

$$\mathrm{S1} = \frac{3 * \sqrt{3} * \mathrm{R1}^2}{2}$$

La surface utile S2 dans le cas d'un maillage à points quadruples et une maille carrée inscrite dans un spot de rayon R2 est exprimée par l'équation :

$$S2 = 2 * R2^2$$

Pour avoir la même surface utile en terme d'aire, il faut satisfaire la relation $(R2/R1) = \left(\sqrt{3 * \sqrt{3}}/2\right) = 1{,}14$ , c'est-à-dire il faut que le rayon du spot R2 de la maille carrée à point quadruple soit 14% plus grand que le rayon du spot R1 de la maille hexagonale à point triple.

Le C/I correspondant à une couverture à points quadruples et maille carrée avec des spots plus grands (i.e des spots de 0,45°) est comparé dans la Figue 9 au C/I correspondant à une couverture à points triples et maille hexagonale avec des spots plus petits (i.e des spots de 0,40°).

Suivant la Figure 9, une première courbe 297 représente l'évolution du C/I, observé dans le cas du plan 202 de la Figure 5 et une couverture à points triples et maille de couverture hexagonale pour un mobile se déplaçant le long du segment 266, en fonction de la distance du mobile par rapport au centre du spot 212, normalisée par rapport au rayon du spot 212 (i.e un rayon correspondant à 0,40° d'ouverture).

Une deuxième courbe 299 représente l'évolution du C/I, observé dans le cas du plan 102 de la Figure 6 et une couverture à points quadruples et maille de couverture carrée pour un mobile se déplaçant le long du segment 282, en fonction de la distance du mobile par rapport au centre du spot 38, normalisée par rapport au rayon du spot 38.

La comparaison des courbes 299 et 297 montre toujours une amélioration du C/I sur la quasi-totalité de la surface utile élémentaire, comprise entre 3 et 4dB vers le bord de la surface, et nettement plus élevée en allant vers le centre du spot lorsqu'on passe à même aire de surface utile d'une couverture à points triples et maille de couverture hexagonale à une couverture à points quadruples et maille de couverture carrée.

Cette planification et réutilisation des fréquences et des deux états de polarisation permet ainsi d'obtenir un gain de C/I et d'agrandir en conséquence la zone interne centrale de chaque spot d'émission sur un critère de C/I.

Suivant la Figure 10A, sont représentées superposées dans un même plan image 302 les images 304, 306, respectivement d'un premier réseau de sources d'une première d'antenne SFPB et d'un deuxième réseau de sources d'une deuxième antenne SFPB décalée par rapport à la première dans un même plan image, les première et deuxième antennes formant le système antennaire mettant en oeuvre le premier mode de réalisation du système 102 de la figure 2.

La première antenne comporte le premier réseau de sources réparties selon une maille de premier réseau carrée et un premier réflecteur principal, non représenté sur la Figure 10A mais supposé en arrière plan de la Figure 10A vers l'observateur de la Figure.

La deuxième antenne comporte le deuxième réseau de sources réparties selon une maille de deuxième réseau carrée et un deuxième réflecteur principal.

Les premier et deuxième réseaux de sources ainsi que les premier et deuxième réflecteurs principaux sont géométriquement configurés de sorte à former des spots utiles de couverture répartis au sol selon une maille carrée.

La Figure 10B est une vue de la couverture 312 pavée et colorée par les surfaces élémentaires de forme carrée, une première grille de surfaces élémentaires de même polarisation P1 étant généré par les spots de la première grille de spots G1, notamment les spots 314, 316, 318, 320, 322, eux-mêmes générés par le premier réseau de sources dont une image 304 est fournie à la Figure 10A, une deuxième grille de surfaces élémentaires de même polarisation P2 étant généré par les spots de la deuxième grille de spots G2, notamment les spots 332, 334, 336, 338, eux-mêmes générés par le deuxième réseau de sources dont une image 306 est fournie à la Figure 10A.

Ce pavage coloré par des surfaces utiles élémentaires de forme carrée selon le premier mode de réalisation du système 102 de la figure 2, réalisé par la configuration d'antenne de la Figure 10A, permet de réaliser une couverture améliorée en termes de C/I de la zone géographique de service 22.

La Figure 11 est une vue partielle d'une première configuration d'un système antennaire MFPB 352 (i.e. ayant plusieurs sources par faisceau) à maille de réseau hexagonale et plus particulièrement un vue de son réseau de sources 354 et de ses groupements, en quadrisources, connectés de manière idoine de sorte à réaliser un deuxième mode de réalisation d'un système selon l'invention dans lequel la maille de couverture est rectangulaire.

Le système antennaire d'émission multifaisceaux 352 est réalisé par une unique antenne d'émission à plusieurs sources par faisceau (MFPB qui comporte un réflecteur principal et le réseau 354 de plusieurs sources illuminant le réflecteur.

Ici, seules sont représentées dix sources 356, 358, 360, 362, 364, 366, 368, 370, 372, 374. Les sources sont réparties suivant une maille de réseau antenne hexagonale et associées en plusieurs groupes 382, 384, 386, 388, 392, 394, 396, 398 de quatre sources, décalés les uns par rapport aux autres selon des directions X et Y d'un plan, chaque source comportant un élément rayonnant lié à une chaîne hyperfréquence. Les sources peuvent avoir une ouverture circulaire ou carrée.

Il est à remarquer qu'il est connu du brevet FR 2 939 971 de réaliser une chaîne radiofréquence très compacte en utilisant un transducteur orthomode, appelé OMT, dissymétrique à deux branches associé à un coupleur à branches déséquilibré. Cette chaîne radiofréquence fonctionne en bipolarisation à l'émission et à la réception et comporte des composants radiofréquence et des circuits de combinaison dont l'encombrement ne dépasse pas le diamètre du cornet.

Ici sur la Figure 11, deux groupes consécutifs adjacents selon la direction X sont espacés d'un premier pas L1 correspondant à une source selon la direction X et partagent une source en commun, et deux groupes consécutifs adjacents selon la direction Y sont espacés d'un deuxième pas L2 correspondant à une source selon la direction Y et partagent une source en commun.

Ici sur la Figure 11, seules sont décrits ici de manière explicite, les trois groupements 382, 384, 386.

Le premier groupement 382, désigné par Gr1, comporte les sources 356, 360, 362, 366.

Le deuxième groupement 384, désigné par Gr2, comporte les sources 358, 362, 364, 368, est adjacent au premier groupement 382, Gr1, et espacé de ce dernier du pas L1 suivant la direction X. Les premier et deuxième groupements Gr1, Gr2 partagent en commun la source 362.

Le troisième groupement 386, désigné par Gr3, comporte les sources 366, 370, 372, 374, est adjacent au premier groupement 382, Gr1, et espacé de ce dernier du pas L2 suivant la direction Y. Les premier et troisième groupements Gr1, Gr3 partagent en commun la source 366.

Chaque source comporte un premier port T1 et un deuxième port d'émission T2 de même fréquence F, à la première polarisation P1 pour le premier port T1 et à la deuxième polarisation P2 pour le deuxième port, les première et deuxième polarisations P1, P2 étant orthogonales entre elles, et la fréquence F désignant de manière simplifiée la bande totale de fréquences BT.

Pour chaque groupe de quatre sources adjacentes, les quatre premiers ports d'émission T1 ou les quatre deuxièmes ports d'émission T2 correspondant à un même couple de valeur de fréquence et de polarisation, (F, P1) ou (F, P2), sont reliés entre eux, les quatre ports d'émission reliés entre eux formant un faisceau d'émission.

Pour la formation de chaque faisceau, les liaisons entre les ports d'émission d'un groupe de quatre sources sont réalisés par des circuits de distribution, les circuits de distribution dédiés à la formation de faisceaux différents étant indépendants entre eux.

Le réseau de sources, le réflecteur et les circuits de distribution sont configurés en termes de géométrie et de connectivité, de sorte à former des surfaces utiles élémentaires de spots réparties selon une maille de couverture rectangulaire.

Suivant la Figure 12, un schéma 392 des connexions de premiers ports T1 entre eux et de deuxièmes ports T2 entre eux au sein de chaque groupement quadrisources du réseau de la Figure 11 est partiellement illustré avec en correspondance un pavage 394, illustré également partiellement, de la zone de couverture. Ce schéma permet de réaliser une couverture colorée en termes d'états de polarisation P1, P2 et de maille de couverture rectangulaire du deuxième mode de réalisation du système selon l'invention.

Ici, quatre premiers ports T1, 396, 400, 402, 406, appartenant respectivement aux sources 356, 360, 362, 366 du premier groupement Gr1, sont reliés ensemble pour former une surface élémentaire de spot ou maille de couverture rectangulaire, associée à la ressource de transmission (F, P1) et désignée par la référence numérique 407.

Quatre deuxième ports T2, 398, 412, 414, 418, appartenant respectivement aux sources 358, 362, 364, 368 du deuxième groupement Gr2, sont reliés ensemble pour former une surface élémentaire de spot ou maille de couverture rectangulaire, associée à la ressource de transmission (F, P2) et désignée par la référence numérique 419.

Quatre deuxièmes ports T2, 420, 422, 424, 426, respectivement des sources 366, 370, 372, 374 sont reliés ensemble pour former une surface élémentaire de spot ou maille de couverture rectangulaire, associée à la ressource de transmission (F, P2) et désignée par la référence numérique 427.

Ces exemples de connexions peuvent être étendus aux autres groupements pour réaliser la couverture à points quadruples et le plan de réutilisation d'une même bande principale et de deux états de polarisation suivant le deuxième mode de réalisation du système selon l'invention.

Suivant la Figure 13, la couverture 394 colorée en termes d'états de polarisation à maille rectangulaire du deuxième mode de réalisation du système selon l'invention, réalisée par la configuration de l'antenne MFPB décrite dans les Figures 11 et 12, est illustrée sur une étendue géographique plus grande.

Suivant un troisième mode de réalisation du système selon l'invention, une couverture à points quadruples, colorée en termes de la réutilisation d'une même bande de fréquences principale BP et deux états de polarisation utilise une maille de couverture losange.

Pour réaliser cette couverture colorée à maille de couverture losange, le système antennaire d'émission multifaisceaux comporte une première antenne d'émission et une deuxième antenne à plusieurs sources par faisceau (MFPB).

La première antenne d'émission comporte un premier réflecteur principal et un premier réseau de plusieurs sources illuminant le premier réflecteur principal. La deuxième antenne d'émission comporte un deuxième réflecteur principal et un deuxième réseau de plusieurs sources illuminant le deuxième réflecteur principal.

Suivant la Figure 14 et une deuxième configuration d'antenne, les premier et deuxième réseaux ont une architecture identique selon laquelle les sources d'un réseau antenne 502 sont réparties suivant une maille de réseau hexagonale associés en plusieurs groupes, décalés les uns par rapport aux autres selon des directions X et Y d'un plan, chaque source comportant un élément rayonnant lié à une chaîne hyperfréquence.

Ici, seules sont représentées dix sources 504, 506, 508, 510, 512, 514, 516, 518, 520, 522. Les sources sont réparties suivant une maille de réseau antenne hexagonale et associées en plusieurs groupes 532, 534, 536, 538 de quatre sources, décalés les uns par rapport aux autres selon des directions X et Y d'un plan, chaque source comportant un élément rayonnant lié à une chaîne hyperfréquence. Les sources peuvent avoir une ouverture circulaire ou carrée.

Deux groupes consécutifs adjacents selon la direction X sont espacés d'un premier pas L1 correspondant à une source selon la direction X et partagent deux sources en commun.

Deux groupes consécutifs adjacents selon la direction Y sont espacés d'un deuxième pas L2 correspondant à deux sources selon la direction Y et ne partagent aucune source en commun.

Ici sur la Figure 14, seules sont décrits ici de manière explicite, les trois groupements 532, 534, 536.

Le premier groupement 532, désigné par Grp1, comporte les sources 504, 506, 508, 510.

Le deuxième groupement 534, désigné par Grp2, comporte les sources 508, 510, 512, 514, est adjacent au premier groupement 532, Grp1, et espacé de ce dernier du pas L1 suivant la direction X. Les premier et deuxième groupements Grp1, Grp2 partagent en commun les sources 508, 510.

Le troisième groupement 536, désigné par Grp3, comporte les sources 516, 518, 520, 522, est adjacent au premier groupement 532, Grp1, et espacé de ce dernier du pas L2 suivant la direction Y. Les premier et troisième groupements Grp1, Grp3 ne partagent aucune source en commun.

Chaque source comporte un premier port T1 et un deuxième port d'émission T2 de même fréquence F, à la première polarisation P1 pour le premier port T1 et à la deuxième polarisation P2 pour le deuxième port, les première et deuxième polarisations P1, P2 étant orthogonales entre elles, et la fréquence F désignant de manière simplifiée la bande totale de fréquences BT.

Pour chaque groupe de quatre sources adjacentes, les quatre premiers ports d'émission T1 ou les quatre deuxièmes ports d'émission T2 correspondant à un même couple de valeur de fréquence et de polarisation, (F, P1) ou (F, P2), sont reliés entre eux, les quatre ports d'émission reliés entre eux formant un faisceau d'émission.

Pour la formation de chaque faisceau, les liaisons entre les ports d'émission d'un groupe de quatre sources sont réalisés par des circuits de distribution, les circuits de distribution dédiés à la formation de faisceaux différents étant indépendants entre eux.

Les premier et deuxième réseaux de sources, les premier et deuxième réflecteurs principaux et les circuits de distribution sont configurés en termes de géométrie et de connectivité, de sorte à former des spots utiles de couverture répartis selon une maille de couverture losange.

Suivant la Figure 15, un schéma 552 des connexions de premiers ports T1 entre eux et de deuxièmes ports T2 entre eux au sein de chaque groupement quadri-sources du réseau 502 de la Figure14 correspondant à une antenne est partiellement illustré avec en correspondance un pavage 394, illustré également partiellement, de la zone de couverture. Ce schéma permet de réaliser une couverture colorée en termes d'états de polarisation P1, P2 et de maille de couverture rectangulaire du deuxième mode de réalisation du système selon l'invention.

Ici, quatre premiers ports T1, 554, 556, 558, 560, appartenant respectivement aux sources 504, 506, 508, 510 du premier groupement Grp1, sont reliés ensemble pour former une surface élémentaire de spot ou maille de couverture losange, associée à la ressource de transmission (F, P1) et désignée par la référence numérique 561.

Quatre deuxièmes ports T2, 562, 564, 566, 568, appartenant respectivement aux sources 508, 510, 514, 512 du deuxième groupement Grp2, sont reliés ensemble pour former une surface élémentaire de spot ou maille de couverture losange, associée à la ressource de transmission (F, P2) et désignée par la référence numérique 569.

Quatre premiers ports T2, 572, 574, 576, 578, respectivement des sources 516, 518, 520, 522 sont reliés ensemble pour former une surface élémentaire de spot ou maille de couverture rectangulaire, associée à la ressource de transmission (F, P1) et désignée par la référence numérique 579.

Ces exemples de connexions peuvent être étendus aux autres groupements de chacune des deux antennes pour réaliser pour chacune une demi-couverture de la couverture totale à points quadruples respectant le plan de réutilisation d'une même bande principale et de deux états de polarisation suivant le troisième mode de réalisation du système selon l'invention.

En décalant les première et deuxième antennes selon la direction Y d'un pas égal à une source dans le plan image, le système antennaire fournissant la couverture totale du système est obtenue.

Suivant la Figure 16, la couverture totale 602 colorée en termes d'états de polarisation à maille losange du troisième mode de réalisation du système selon l'invention, réalisée par la configuration des antennes MFPB du système antennaire décrite dans les Figures 14 et 15, est illustrée sur une étendue géographique plus grande intégrant notamment les mailles losanges de couverture 561, 569, 579 appartenant à la première antenne.

Suivant la Figure 17, une vue partielle d'une troisième configuration d'un système antennaire MFPB 652 à maille de réseau carrée et plus particulièrement un vue de son réseau de sources 654 et de ses groupements, en quadri-sources, connectés de manière idoine de sorte à réaliser un quatrième mode de réalisation d'un système selon l'invention dans lequel la maille de couverture est carrée, sont illusttrées.

Le système antennaire d'émission multifaisceaux 652 est réalisé par une unique antenne d'émission à plusieurs sources par faisceau MFPB qui comporte un réflecteur principal et le réseau 654 de plusieurs sources illuminant le réflecteur.

Ici, seules sont représentées quatre sources 656, 658, 660, 662. Les sources sont réparties suivant une maille de réseau antenne carrée et associées en plusieurs groupes 672, 674, 676, 678, 680 de quatre sources, décalés les uns par rapport aux autres selon des directions X et Y d'un plan orthogonales entre elles, chaque source comportant un élément rayonnant lié à une chaîne hyperfréquence. L'ouverture rayonnante de l'élément rayonnant de chaque source a une forme carrée.

Deux groupes consécutifs adjacents selon la direction X sont espacés d'un premier pas L1 correspondant à une source selon la direction X et partagent une source en commun. Deux groupes consécutifs adjacents selon la direction Y sont espacés d'un deuxième pas L2 correspondant à une source selon la direction Y et partagent une source en commun.

Ici sur la Figure 17, seul est décrit ici de manière explicite le groupement 672 qui comporte les sources 656, 658, 660, 662.

Chaque source comporte un premier port T1 et un deuxième port d'émission T2 de même fréquence F, à la première polarisation P1 pour le premier port T1 et à la deuxième polarisation P2 pour le deuxième port, les première et deuxième polarisations P1, P2 étant orthogonales entre elles, et la fréquence F désignant de manière simplifiée la bande totale de fréquences BT.

Pour chaque groupe de quatre sources adjacentes, les quatre premiers ports d'émission T1 ou les quatre deuxièmes ports d'émission T2 correspondant à un même couple de valeur de fréquence et de polarisation, (F, P1) ou (F, P2), sont reliés entre eux, les quatre ports d'émission reliés entre eux formant un faisceau d'émission.

Pour la formation de chaque faisceau, les liaisons entre les ports d'émission d'un groupe de quatre sources sont réalisés par des circuits de distribution, les circuits de distribution dédiés à la formation de faisceaux différents étant indépendants entre eux.

Le réseau de sources, le réflecteur et les circuits de distribution sont configurés en termes de géométrie et de connectivité, de sorte à former des surfaces utiles élémentaires de spots réparties selon une maille de couverture carrée.

Ici, pour chaque groupe 672, 674, 676, 678, les premiers ports des sources respectives qui les composent sont reliés entre eux pour rayonner la ressource électromagnétique associée au couple (F, P2). Par exemple les premiers ports des sources 656, 658, 660, 662 sont reliés entre eux.

Les deuxièmes ports des quatre sources, formant le groupe 480 et partagées respectivement avec les groupes 672, 674, 676, 678, sont reliés entre eux.

Suivant la Figure 18, la couverture 692 colorée en termes d'états de polarisation à maille carrée du quatrième mode de réalisation du système selon l'invention, réalisée par la troisième configuration de l'antenne MFPB décrite dans la Figure 17, est illustrée partiellement par la couverture partielle 494.

La couverture partielle 694 en forme de croix comprend quatre surfaces utiles élémentaires carrées 695, 696, 697, 698, associées chacune au couple (F, P2) de ressource, qui entourent la surface utile élémentaire carrée 699, associée au couple (F, P1). Les surfaces utiles élémentaires carrées 695, 696, 697, 698, 699 sont formées et rayonnées respectivement par les groupes de sources 672, 674, 678, 676 et 680.

La couverture partielle 694 s'étend naturellement à la couverture totale 692, colorée en termes d'états de polarisation sous la forme d'un damier.

De manière générale, le planificateur et allocateur de ressources de transmission voie aller est configuré pour attribuer à un terminal émetteur lorsqu'il le demande une ressource de transmission voie aller en termes d'une sous-bande de fréquence et d'une polarisation en fonction de la position géographique du terminal émetteur et d'un plan d'allocation de ressources de transmission.

Dans le cas d'un contrôle insuffisant de l'attitude de la plateforme du satellite pouvant causer un dépointage rédhibitoire de l'antenne de réception du satellite, un système automatique de correction du dépointage de l'antenne de réception pourra être utilisé.

Le moyen de positionnement géographique de chaque terminal émetteur est suffisamment précis pour déterminer dans quel spot de réception il se trouve, s'il se trouve dans une zone interne ou dans une zone périphérique du spot. Le moyen de positionnement géographique est par exemple un récepteur d'un système de positionnent global par satellite. Il peut également être un récepteur des niveaux de puissances de canaux internes prédéterminés du système de radiocommunications qui, rapportées à une station au sol du système de radiocommunications, permettront à ladite station au sol de déterminer la position géographique du récepteur.

Des variantes de schéma d'allocation sont possibles en fonction de la variabilité locale du trafic, traduite en densité locale de trafic, et de la dynamique temporelle du trafic sur la couverture. Par exemple, dans un premier cas, la taille de la zone interne centrale, représentative d'un facteur d'échelle, varie en fonction du spot de réception et du temps. Dans un deuxième cas, la taille de la zone centrale varie en fonction du spot de réception et est indépendante du temps. Dans un troisième cas, la taille de la zone centrale est constante, indépendamment du spot de réception et du temps.

Suivant la Figure 19, un procédé 702 de réutilisation complète ou fractionnaire de fréquences d'une bande totale BT allouée à une voie aller est mis en oeuvre dans un système de radiocommunications satellitaire tel que celui décrit dans les Figures 1 à 18.

Le système de radiocommunications satellitaire comprend un satellite ayant un système antennaire d'émission multifaisceaux, configuré pour couvrir une couverture géographique, décomposée en une pluralité de spots émission, et un ensemble de terminaux émetteurs répartis sur l'ensemble des spots, chaque terminal comprenant un moyen de positionnement géographique.

Le système de radiocommunications satellitaire comprend également un planificateur et allocateur de ressources de transmission voie aller.

Le procédé 702 comprend un ensemble d'étapes exécutées successivement.

Dans une première étape 704, un plan d'allocation de ressources de transmission voie aller est déterminé suivant lequel chaque spot d'émission est constitué d'une zone interne centrale et d'une zone périphérique entourant la zone interne centrale. En outre, suivant le plan de réutilisation le premier état de polarisation P1 et le deuxième état de polarisation P2 sont respectivement alloués aux spots de la première grille G1 et aux spots de la deuxième grille G2. Une même bande principale BP de fréquences d'un seul tenant ou en plusieurs morceaux, formant une partie prépondérante de la bande totale BT en termes de bande occupée, est également allouée en totalité à chaque zone interne centrale des spots des première et deuxième grilles. Les fréquences de la bande totale BT qui ne font pas partie de la bande principale BP forment une bande secondaire BS d'un seul tenant ou en plusieurs morceaux qui se décompose en un nombre entier n, supérieur ou égal à 2, de sous-bandes secondaires d'un seul tenant chacune, séparées ou adjacentes, réparties sur l'ensemble des zones périphériques des spots d'émission suivant un schéma multicolore à n couleurs de sous-bandes secondaires.

Les points d'intersection entre les spots des première et deuxième grilles sont des points quadruples, c'est-à-dire ayant un ordre de multiplicité égal à 4.

Les points quadruples définissent des surfaces utiles élémentaires de couverture à raison d'une par spot qui forment un pavage de la zone de couverture.

Chaque surface utile élémentaire constitue une maille du pavage ayant la forme d'un parallélogramme.

Chaque zone interne est inscrite dans une surface utile élémentaire.

Ensuite dans une deuxième étape 706, pour chaque terminal récepteur qui souhaite disposer d'une ressource de transmission, il est déterminé dans quel spot d'émission le terminal récepteur se trouve et s'il se trouve dans une zone interne ou une dans une zone périphérique.

Puis, dans une troisième étape 708, le planificateur et allocateur de ressources de transmission voie aller attribue à un terminal récepteur, lorsqu'il le demande, une ressource de transmission voie aller en termes d'une sous-bande de fréquence de la bande totale BT et d'un état de polarisation pris parmi un premier état de polarisation P1 et un deuxième état de polarisation P2 en fonction de la position géographique du terminal récepteur.

Lorsque le terminal récepteur se trouve dans une zone interne, il est alloué au terminal une ressource de transmission de la bande principale et de l'état de polarisation qui ont été attribués par le plan de réutilisation à la zone interne du spot d'émission dans lequel le terminal se trouve.

Lorsque le terminal récepteur se trouve dans une zone périphérique, il est alloué au terminal une ressource de transmission de la sous-bande auxiliaire et l'état de polarisation qui ont été attribués à la zone périphérique du spot d'émission dans lequel le terminal se trouve.

En variantes, la taille de la zone centrale varie en fonction du spot d'émission et du temps, ou la taille de la zone centrale varie en fonction du spot d'émission et est indépendante du temps.

Le système de radiocommunications satellitaire et le procédé de réutilisation de fréquences sont configurés pour une réception de la voie retour par le satellite dans une bande comprise dans l'ensemble des bandes C, X, Ku, Ka, L, S, Q et V.

Une planification statique du motif cellulaire correspond à un optimum pour un système à charge maximum.

Lorsque les systèmes ne sont pas chargés à 100%, une planification dynamique sur un critère de C/I peut être envisagée, nonobstant qu'un optimum à un instant donné n'est plus forcément cohérent avec l'instant suivant et entraîne une complexité dans la gestion de la planification.

Les procédés de réutilisation de fréquences et de polarisations utilisant une couverture à points quadruples tels que décrits ci-dessus permettent d'augmenter la capacité de transmission d'un satellite mais également la densité de capacité, c'est-à-dire le débit adressable par unité de surface.

## Revendications

1. Système de radiocommunications satellitaire multifaisceaux large bande, configuré pour une réutilisation fractionnaire de fréquences d'une bande totale BT allouée à une voie aller (4), comprenant

.- un satellite (10) ayant un système antennaire d'émission multifaisceaux (20), configuré pour couvrir une zone géographique de service (22), décomposée en une pluralité de spots émission (26, 28, 30, 32, 34, 36, 38, 40, 42, 44, 46, 48, 50), avec une première grille G1 de spots (26, 28, 30, 36, 38, 40, 46, 48, 50) et une deuxième grille G2 de spots d'émission (32, 34, 42, 44), les spots d'émission (26, 28, 30, 32, 34, 36, 38, 40, 42, 44, 46, 48, 50), de la première grille G1 et les spots d'émission (32, 34, 42, 44) de la deuxième grille G2 étant positionnés et leur diagramme de rayonnement étant configurés de sorte qu'il existe des points d'intersection (62, 64, 66, 68) entre les contours iso roll-off d'un nombre entier m, supérieur ou égal à trois, de spots adjacents se recouvrant partiellement, le nombre m désignant l'ordre de multiplicité des points d'intersection ; et
.- un ensemble de terminaux récepteurs (14, 16) répartis sur l'ensemble des spots d'émission, chaque terminal récepteur (14, 16) comprenant un moyen de positionnement géographique (72) et un moyen de réception (74) suivant une ressource de transmission allouée ;
.- un planificateur et allocateur de ressources de transmission voie aller (18), réalisé sous la forme d'un ou plusieurs calculateurs électroniques (82), configuré pour attribuer à un terminal récepteur (14, 16) lorsqu'il le demande une ressource de transmission voie aller en termes d'une sous-bande de fréquence de la bande totale BT et d'un état de polarisation pris parmi un premier état de polarisation P1 et un deuxième état de polarisation P2 en fonction de la position géographique du terminal récepteur (14, 16) et d'un plan d'allocation de ressources de transmission (102, 302) voie aller suivant lequel,

chaque spot d'émission (26, 28, 30, 32, 34, 36, 38) est constitué d'une zone interne centrale (106, 108, 110, 112, 114, 116, 118) et d'une zone périphérique (126, 128, 130, 132, 134, 136, 138) entourant la zone interne centrale; et

le premier état de polarisation et le deuxième état de polarisation sont respectivement alloués aux spots de la première grille G1 et aux spots de la deuxième grille G2, et

une même bande principale BP de fréquences d'un seul tenant ou en plusieurs morceaux, formant une partie prépondérante de la bande totale BT en termes de bande occupée, est allouée en totalité à chaque zone interne centrale (106, 108, 110, 112, 114, 116, 118) des spots des première et deuxième grilles ; et

les fréquences de la bande totale BT qui ne font pas partie de la bande principale BP forment une bande secondaire BS d'un seul tenant ou en plusieurs morceaux qui se décompose en un nombre entier n, supérieur ou égal à 2, de sous-bandes secondaires d'un seul tenant chacune, séparées ou adjacentes, réparties sur l'ensemble des zones périphériques (126, 128, 130, 132, 134, 136, 138) des spots d'émission suivant un schéma multicolore à n couleurs de sous-bandes secondaires; et

les points d'intersection entre les spots des premières et deuxième grilles sont des points quadruples d'intersection c'est-à-dire ayant un ordre de multiplicité égal à 4.

**2.** Système de radiocommunication satellitaire multifaisceaux selon la revendication 1, dans lequel
les points quadruples définissent des surfaces utiles élémentaires de couverture à raison d'une par spot qui forment un pavage de la zone de couverture, et chaque surface utile élémentaire constitue une maille du pavage de même taille et de même forme, et

la forme de la maille est un parallélogramme.

**3.** Système de radiocommunication satellitaire multifaisceaux selon la revendication 2, dans lequel
la forme de la maille est un carré ou un rectangle ou un losange.

**4.** Système de radiocommunication satellitaire multifaisceaux selon l'une quelconque des revendications 1 à 3, dans lequel chaque zone interne est inscrite dans la surface utile élémentaire de son spot d'émission.

**5.** Système de radiocommunication satellitaire multifaisceaux selon l'une quelconque des revendications 1 à 4, dans lequel
le nombre n de sous-bandes secondaires est un nombre entier compris dans l'ensemble des nombre 2, 3, 4, 7 et 12, et de préférence égal à 2.

**6.** Système de radiocommunication satellitaire multifaisceaux selon l'une quelconque des revendications 1 à 5, dans lequel
Les premier et deuxième états de polarisation (P1, P2) sont la polarisation circulaire gauche et la polarisation circulaire droite ou une première polarisation linéaire suivant un premier axe et une deuxième polarisation linéaire suivant un deuxième axe orthogonal au premier axe.

**7.** Système de radiocommunication satellitaire multifaisceaux selon l'une quelconque des revendications 1 à 5, dans lequel le système antennaire d'émission multifaisceaux comporte des première et deuxième antennes d'émission à source unique par faisceau (SFPB),
La première antenne comportant un premier réseau de sources réparties selon une maille de premier réseau carrée et un premier réflecteur principal ; La deuxième antenne comportant un deuxième réseau de sources réparties selon une maille de deuxième réseau carrée et un deuxième réflecteur principal ; et
Les premier et deuxième réseaux de sources ainsi que les premier et deuxième réflecteurs principaux sont géométriquement configurés de sorte à former une couverture de la zone de service à points quadruple et maille de couverture carrée.

**8.** Système de radiocommunication satellitaire multifaisceaux selon l'une quelconque des revendications 1 à 6, dans lequel le système antennaire d'émission multifaisceaux comporte une unique antenne d'émission à plusieurs sources par faisceau (MFPB) ; et
L'antenne d'émission comporte un réflecteur principal et un réseau de plusieurs sources illuminant le réflecteur, les sources étant réparties suivant une maille de réseau antenne hexagonale ou carrée et associées en plusieurs groupes décalés les uns par rapport aux autres selon des directions X et Y d'un plan, chaque source comportant un élément rayonnant lié à une chaîne hyperfréquence ;

.- Chaque source comporte un premier port et un deuxième port d'émission de même fréquence (F) et à polarisations (P1, P2) orthogonales entre elles,
.- Les sources sont associées par groupes de quatre sources adjacentes selon des directions X et Y ;
.- pour chaque groupe de quatre sources adjacentes, les premiers ports d'émission ou les deuxième ports d'émission correspondant à un même couple de valeur de fréquence et de polarisation (F, P1), (F, P2), sont reliés entre eux, les quatre ports d'émission reliés entre eux formant un faisceau d'émission ;
.- pour la formation de chaque faisceau, les liaisons entre les ports d'émission d'un groupe de quatre sources sont réalisés par des circuits de distribution, les circuits de distribution dédiés à la formation de faisceaux différents étant indépendants entre eux ;
.- Le réseau de sources, le réflecteur et les circuits de distribution sont configurés en termes de géométrie et de connectivité, de sorte à former une couverture totale ou une demi-couverture de la zone de service par des spots émission répartis selon une maille de couverture comprise parmi les mailles rectangulaires, losanges et carrées.

9. Système de radiocommunication satellitaire multifaisceaux selon la revendication 8, dans lequel La maille du réseau des sources est une maille de réseau antenne hexagonale et l'ouverture rayonnante de l'élément rayonnant a une forme circulaire ou carrée ; et

> .- deux groupes consécutifs adjacents (Gr1, Gr2) selon la direction X sont espacées d'un premier pas L1 correspondant à une source selon la direction X et partagent une source en commun ;
> .- deux groupes consécutifs adjacents (Gr1, Gr3) selon la direction Y sont espacés d'un deuxième pas L2 correspondant à une source selon la direction Y et partage une source en commun ;

Chaque groupe de quatre sources formant un faisceau d'émission de forme sensiblement rectangulaire ou losange pour un réglage des circuits de distribution associées.

10. Système de radiocommunication satellitaire multifaisceaux selon la revendication 8, dans lequel La maille du réseau des sources est une maille de réseau antenne hexagonale et l'ouverture rayonnante de l'élément rayonnant a une forme circulaire ou carrée ; et

> .- deux groupes consécutifs adjacents (Grp1, Grp2) selon la direction X sont espacés d'un premier pas L1 correspondant à une source selon la direction X et partagent deux sources en commun ; et deux groupes consécutifs adjacents (Grp1, Grp3) selon la direction Y sont espacés d'un deuxième pas L2 correspondant à deux sources selon la direction Y et ne partagent aucune source en commun ; et

chaque groupe de quatre sources forme un faisceau d'émission de forme sensiblement losange ou rectangulaire pour un réglage des circuits de distribution associées audit groupe.

11. Système de de radiocommunication satellitaire multifaisceaux selon la revendication 8, dans lequel

> .- La maille du réseau des sources est une maille de réseau antenne carrée et l'ouverture rayonnante de l'élément rayonnant a une forme carrée ; et

.- les deux directions X et Y forment un angle droit ; et
.- deux groupes consécutifs adjacents (Gr1, Gr2) selon la direction X sont espacés d'un premier pas L1 correspondant à une source selon la direction X et partagent une source en commun ; et deux groupes consécutifs adjacents (Gr1, Gr3) selon la direction Y sont espacés d'un deuxième pas L2 correspondant à une source selon la direction Y et partagent une source en commun ; et

chaque groupe de quatre sources forme un faisceau d'émission de forme sensiblement carrée pour un réglage des circuits de distribution associées audit groupe ; et
le réseau de sources, le réflecteur et les circuits de distribution sont configurés en termes de géométrie et de connectivité, de sorte à former une couverture totale de la zone de service par des spots émission répartis selon une maille de couverture carrée.

12. Système de radiocommunication satellitaire multifaisceaux selon l'une quelconque des revendications 1 à 5, dans lequel le système antennaire d'émission multifaisceaux comporte une première antenne d'émission et une deuxième antenne à plusieurs sources par faisceau (MFPB) ; et

> - La première antenne d'émission comporte un premier réflecteur principal et un premier réseau de plusieurs sources illuminant le premier réflecteur principal ;
> - La deuxième antenne d'émission comporte un deuxième réflecteur principal et un deuxième réseau de plusieurs sources illuminant le deuxième réflecteur principal ;
> .- les premier et deuxième réseaux ont une architecture identique selon la laquelle, les sources d'un réseau antenne sont réparties suivant une maille de réseau hexagonale associés en plusieurs groupes, décalés les uns par rapport aux autres selon des directions d'un plan X et Y, chaque source comportant un élément rayonnant lié à une chaîne hyperfréquence ;
> .- Chaque source comporte un premier port et un deuxième port d'émission de même fréquence (F1) et à polarisations (P1, P2) orthogonales entre elles,
> .- Les sources sont associées par groupes de quatre sources adjacentes selon les directions X et Y ;
> .- pour chaque groupe de quatre sources adjacentes, les premiers ports d'émission correspondant à un même couple de valeur de fréquence et de polarisation (F1, P1), (F1, P2), sont reliés deux à deux selon la direction X puis deux à deux selon la direction Y, les quatre ports d'émission reliés entre eux formant un faisceau d'émission ;

.- pour la formation de chaque faisceau, les liaisons entre les ports d'émission d'un groupe de quatre source sont réalisés par des circuits de distribution, les circuits de distribution dédiés à la formation de faisceaux différents étant indépendants entre eux ;

.- Les premier et deuxième réseaux de sources, les premier et deuxième réflecteurs principaux, et les circuits de distribution sont configurés en termes de géométrie et de connectivité, de sorte à former une couverture totale de la zone de service par des spots émission répartis selon une maille de couverture rectangulaire ou losange.

13. Système de de radiocommunication satellitaire multifaisceaux selon la revendication 12, dans lequel

La maille du premier réseau des sources et du deuxième réseau de sources est une maille de réseau antenne hexagonale et l'ouverture rayonnante de l'élément rayonnant de chaque source a une même forme circulaire ou carrée; et

pour chaque réseau :

.- deux groupes consécutifs adjacents (Grp1, Grp2) selon la direction X sont espacées d'un premier pas L1 correspondant à une source selon la direction X et partagent deux sources en commun ;

.- deux groupes consécutifs adjacents (Grp1, Grp3) selon la direction Y sont espacés d'un deuxième pas L2 correspondant à deux sources selon la direction Y et ne partagent aucune source en commun ;

Chaque groupe de quatre sources formant un faisceau d'émission de forme sensiblement losange pour un réglage des circuits de distribution associées.

14. Système de de radiocommunication satellitaire multifaisceaux selon la revendication 12, dans lequel

La maille du premier réseau des sources et du deuxième réseau de sources est une maille de réseau antenne hexagonale et l'ouverture rayonnante de l'élément rayonnant de chaque source a une même forme circulaire ou carrée; et

Pour chaque réseau :

.- deux groupes consécutifs adjacents (Gr1, Gr2) selon la direction X sont espacés d'un premier pas L1 correspondant à une source selon la direction X et partagent une source en commun ; et deux groupes consécutifs adjacents (Gr1, Gr3) selon la direction Y sont espacés d'un deuxième pas L2 correspondant à une source selon la direction Y et partagent une source en commun ; et

chaque groupe de quatre sources forme un faisceau d'émission de forme sensiblement rectangulaire pour un réglage des circuits de distribution associées audit groupe.

15. Système de radiocommunication satellitaire multifaisceaux selon l'une quelconque des revendications 1 à 14, dans lequel le satellite est configuré pour rayonner dans chaque spot et sur toute son étendue incluant sa zone centrale et sa zone périphérique, une couleur de ressources de transmission émise, formée de la bande de fréquence principale, de la bande secondaire et de l'état de polarisation alloués audit spot par le plan de fréquences et des états de polarisation.

16. Système de radiocommunication satellitaire multifaisceaux selon l'une quelconque des revendications 1 à 15, comprenant en outre un système automatique de correction du dépointage de l'antenne causé notamment par des variations d'attitude de la plateforme du satellite.

17. Système de radiocommunication satellitaire multifaisceaux selon l'une quelconque des revendications 1 à 16, comprenant en outre un ensemble de terminaux récepteurs répartis sur l'ensemble des spots, et chaque terminal comprend un moyen de positionnement géographique (44) suffisamment précis pour déterminer dans quel spot d'émission il se trouve, et s'il se trouve dans une zone interne ou dans un zone périphérique dudit spot d'émission.

18. Système de radiocommunication satellitaire multifaisceaux selon l'une quelconque des revendications 1 à 17, dans lequel

le planificateur et allocateur de ressources de transmission voie aller (18) est réparti sur l'ensemble des terminaux et/ou d'une ou plusieurs stations auxiliaires ou est en centralisé dans une station (54) de contrôle des ressources et de leur planification.

19. Système de radiocommunication satellitaire multifaisceaux selon l'une quelconque des revendications 1 à 18, dans lequel

La taille de la zone centrale varie en fonction du spot d'émission et du temps, ou

La taille de la zone centrale varie en fonction du spot d'émission et est indépendante du temps ou,

La taille de la zone centrale est constante indépendamment du spot d'émission et du temps.

20. Système de radiocommunication satellitaire multifaisceaux selon l'une quelconque des revendications 1 à 19, configuré pour une émission de la voie aller par le satellite dans une bande comprise dans l'ensemble des bandes C, X, Ku, Ka, L, S, Q et V.

21. Procédé de réutilisation complète ou fractionnaire de fréquences d'une bande totale allouée à une voie aller dans un système de radiocommunication satellitaire multifaisceaux large bande,
le système comprenant

.- un satellite (10) ayant un système antennaire d'émission multifaisceaux (20) configuré pour couvrir une zone géographique de service (22), décomposée en une pluralité de spots émission (26, 28, 30, 32, 34, 36, 38, 40, 42, 44, 46, 48, 50), avec une première grille G1 de spots (26, 28, 30, 36, 38, 40, 46, 48, 50) et une deuxième grille G2 de spots d'émission (32, 34, 42, 44), les spots d'émission (26, 28, 30, 32, 34, 36, 38, 40, 42, 44, 46, 48, 50), de la première grille G1 et les spots d'émission (32, 34, 42, 44) de la deuxième grille G2 étant positionnés et leur diagramme de rayonnement étant configurés de sorte qu'il existe des points d'intersection (62, 64, 66, 68) entre les contours iso roll-off d'un nombre entier m, supérieur ou égal à trois, de spots adjacents se recouvrant partiellement, le nombre m désignant l'ordre de multiplicité des points d'intersection ; et
.- un ensemble de terminaux récepteurs (14, 16) répartis sur l'ensemble des spots d'émission, chaque terminal récepteur (14, 16) comprenant un moyen de positionnement géographique (72) et un moyen de réception (74) suivant une ressource de transmission allouée ; et
.- un planificateur et allocateur de ressources de transmission voie aller (18), réalisé sous la forme d'un ou plusieurs calculateurs électroniques (82) ; Le procédé comprenant les étapes consistant à
.- Déterminer (704) un plan d'allocation de ressources de transmission (102, 302) voie aller suivant lequel,
chaque spot d'émission (26, 28, 30, 32, 34, 36, 38) est constitué d'une zone interne centrale (106, 108, 110, 112, 114, 116, 118) et d'une zone périphérique (126, 128, 130, 132, 134, 136, 138) entourant la zone interne centrale; et
le premier état de polarisation et le deuxième état de polarisation sont respectivement alloués aux spots de la première grille G1 et aux spots de la deuxième grille G2, et
une même bande principale BP de fréquences d'un seul tenant ou en plusieurs morceaux, formant une partie prépondérante de la bande totale BT en termes de bande occupée, est allouée en totalité à chaque zone interne centrale (106, 108, 110, 112, 114, 116, 118) des spots des première et deuxième grilles ; et

les fréquences de la bande totale BT qui ne font pas partie de la bande principale BP forment une bande secondaire BS d'un seul tenant ou en plusieurs morceaux qui se décompose en un nombre entier n, supérieur ou égal à 2, de sous-bandes secondaires d'un seul tenant chacune, séparées ou adjacentes, réparties sur l'ensemble des zones périphériques (126, 128, 130, 132, 134, 136, 138) des spots d'émission suivant un schéma multicolore à n couleurs de sous-bandes secondaires,
.- attribuer (706) à un terminal récepteur (14, 16) lorsqu'il le demande une ressource de transmission voie aller en termes d'une sous-bande de fréquence de la bande totale BT et d'un état de polarisation pris parmi un premier état de polarisation P1 et un deuxième état de polarisation P2 en fonction de la position géographique du terminal récepteur (14, 16) de manière à ce que les points d'intersection entre les spots des premières et deuxième grilles sont des points quadruples, c'est-à-dire ayant un ordre de multiplicité égal à 4 ; et
les points quadruples définissent des surfaces utiles élémentaires de couverture à raison d'une par spot qui forment un pavage de la zone de couverture, et
chaque surface utile élémentaire constitue une maille du pavage ayant la forme d'un parallélogramme, et chaque zone interne est inscrite dans une surface utile élémentaire.

22. Procédé de réutilisation de fréquence selon la revendication 21, comprenant en outre les étapes consistant à:

.- pour chaque terminal qui souhaite disposer d'une ressource de transmission,
.* déterminer (708) dans quel spot d'émission il se trouve et s'il se trouve dans une zone interne ou une dans une zone périphérique, puis
.* lorsque le terminal se trouve dans une zone interne, allouer au terminal une ressource de transmission de la bande principale et de l'état de polarisation qui ont été attribués à la zone interne du spot d'émission dans lequel le terminal se trouve, ou

lorsque le terminal se trouve dans une zone périphérique, allouer au terminal une ressource de transmission de la sous-bande auxiliaire et l'état de polarisation qui ont été attribués à la zone périphérique du spot d'émission dans lequel le terminal se trouve.

23. Procédé de réutilisation de fréquence selon l'une quelconque des revendications 21 à 22, dans lequel La taille de la zone centrale varie en fonction du spot d'émission et du temps, ou

La taille de la zone centrale varie en fonction du spot d'émission et est indépendante du temps ou,

La taille de la zone centrale est constante indépendamment du spot d'émission et du temps.

**Patentansprüche**

1. Breitband-Mehrstrahl-Satellitenfunkkommunikationssystem, konfiguriert für eine teilweise Wiederverwendung von Frequenzen eines Vollbandes BT, das einem Hinweg (4) zugeordnet ist, das Folgendes umfasst:

    - einen Satelliten (10) mit einem Mehrstrahl-Sendeantennensystem (20), konfiguriert zum Abdecken einer geografischen Dienstzone (22), zerlegt in mehrere Sendepunkte (26, 28, 30, 32, 34, 36, 38, 40, 42, 44, 46, 48, 50), mit einem ersten Punktraster G1 (26, 28, 30, 36, 38, 40, 46, 48, 50) und einem zweiten Sendepunktraster G2 (32, 34, 42, 44), wobei die Sendepunkte (26, 28, 30, 32, 34, 36, 38, 40, 42, 44, 46, 48, 50) des ersten Rasters G1 und die Sendepunkte (32, 34, 42, 44) des zweiten Rasters G2 so positioniert sind und ihr Strahlungsdiagramm so konfiguriert ist, dass es Schnittpunkte (62, 64, 66, 68) zwischen den Iso-Roll-Off-Konturen einer ganzen Zahl m, die gleich oder größer ist als drei, von benachbarten, teilweise überlappenden Punkten gibt, wobei die Anzahl m die Multiplizitätsfolge von Schnittpunkten bezeichnet; und

    - einen Satz von Empfangsterminals (14, 16), die auf dem Satz von Sendepunkten verteilt sind, wobei jedes Empfangsterminal (14, 16) ein geografisches Positionierungsmittel (72) und ein Empfangsmittel (74) gemäß einer zugeordneten Übertragungsressource umfasst;

    - einen Planer und Zuordner von Hinweg-Übertragungsressourcen (18), realisiert in Form von einem oder mehreren elektronischen Rechnern (82), konfiguriert zum Zuordnen zu einem Empfangsterminal (14, 16), wenn dieser es anfordert, einer Hinweg-Übertragungsressource im Hinblick auf ein Frequenzsubband des Vollbandes BT und einen Polarisationszustand, ausgewählt aus einem ersten Polarisationszustand P1 und einem zweiten Polarisationszustand P2 in Abhängigkeit von der geografischen Position des Empfangsterminals (14, 16) und einen Hinweg-Übertragungsressourcen-Zuordnungsplan (102, 302), gemäß dem

jeder Sendepunkt (26, 28, 30, 32, 34, 36, 38) aus einer zentralen internen Zone (106, 108, 110, 112, 114, 116, 118) und einer peripheren Zone (126, 128, 130, 132, 134, 136, 138) gebildet wird, die die zentrale interne Zone umgibt; und

der erste Polarisationszustand und der zweite Polarisationszustand jeweils den Punkten des ersten Rasters G1 und den Punkten des zweiten Rasters G2 zugeordnet sind, und

ein selbes Hauptband BP von Frequenzen, aus einem oder aus mehreren Stücken, das einen vorherrschenden Teil des Vollbandes BT im Sinne von belegtem Band bildet, insgesamt jeder internen zentralen Zone (106, 108, 110, 112, 114, 116, 118) von Punkten des ersten und zweiten Rasters zugeordnet ist; und

die Frequenzen des Vollbandes BT, die nicht Teil des Hauptbandes BP sind, ein sekundäres Band BS aus einem oder aus mehreren Stücken bilden, die in eine ganze Zahl n von gleich oder größer als 2 von sekundären Subbändern jeweils aus einem Stück zerlegt sind, getrennt oder benachbart, verteilt auf der Gesamtheit der peripheren Zonen (126, 128, 130, 132, 134, 136, 138) von Sendepunkten gemäß einem mehrfarbigen Schema mit n Farben von sekundären Subbändern; und

die Schnittpunkte zwischen den Punkten des ersten und zweiten Rasters vierfache Schnittpunkte sind, das heißt mit einer Multiplizitätsordnung von 4.

2. Mehrstrahl-Satellitenfunkkommunikationssystem nach Anspruch 1, bei dem
die Vierfachpunkte nützliche elementare Abdeckflächen im Verhältnis von einem pro Punkt definieren, die eine Kachelung der Abdeckzone bilden, und
jede nützliche elementare Fläche eine Kachel der Kachelung mit derselben Größe und derselben Form bildet, und
die Form der Kachel ein Parallelogramm ist.

3. Mehrstrahl-Satellitenfunkkommunikationssystem nach Anspruch 2, bei dem die Form der Kachel ein Quadrat oder ein Rechteck oder eine Raute ist.

4. Mehrstrahl-Satellitenfunkkommunikationssystem nach einem der Ansprüche 1 bis 3, bei dem jede interne Zone in die nützliche elementare Fläche ihres Sendepunkts eingeschrieben ist.

5. Mehrstrahl-Satellitenfunkkommunikationssystem nach einem der Ansprüche 1 bis 4, bei dem
die Anzahl n von sekundären Subbändern eine ganze Zahl aus dem Zahlensatz 2, 3, 4, 7 und 12 und vorzugsweise gleich 2 ist.

6. Mehrstrahl-Satellitenfunkkommunikationssystem nach einem der Ansprüche 1 bis 5, bei dem
der erste und der zweite Polarisationszustand (P1, P2) Linkskreispolarisation und Rechtskreispolarisation oder eine erste lineare Polarisation gemäß einer ersten Achse und eine zweite lineare Polarisation gemäß einer zweiten Achse orthogonal zur ersten Achse ist.

7.  Mehrstrahl-Satellitenfunkkommunikationssystem nach einem der Ansprüche 1 bis 5, bei dem das Mehrstrahl-Sendeantennensystem eine erste und eine zweite Sendeantenne mit einer einzigen Quelle pro Strahl (SFPB) umfasst,
    wobei die erste Antenne ein erstes Netzwerk von Quellen umfasst, die gemäß einer quadratischen Kachel des ersten Netzwerks und einem ersten Hauptreflektor verteilt sind;
    wobei die zweite Antenne ein zweites Netzwerk von Quellen umfasst, die gemäß einer quadratischen Kachel des zweiten Netzwerks und einem zweiten Hauptreflektor verteilt sind; und
    das erste und das zweite Netzwerk von Ressourcen sowie der erste und der zweite Hauptreflektor geometrisch so konfiguriert sind, dass sie eine Abdeckung der Dienstzone mit vierfachen Punkten und quadratischer Abdeckkachel bilden.

8.  Mehrstrahl-Satellitenfunkkommunikationssystem nach einem der Ansprüche 1 bis 6, wobei das Mehrstrahl-Sendeantennensystem eine einzige Sendeantenne mit mehreren Quellen pro Strahl (MFPB) umfasst; und
    die Sendeantenne einen Hauptreflektor und ein Netzwerk von mehreren den Reflektor beleuchtenden Quellen umfasst, wobei die Quellen gemäß einer hexagonalen oder quadratischen Antennennetzkachel verteilt und in mehreren in den Richtungen X und Y einer Ebene voneinander versetzten Gruppen assoziiert sind, wobei jede Quelle ein mit einer Höchstfrequenzkette verbundenes Strahlungselement umfasst;

    - jede Quelle einen ersten Port und einen zweiten Port zum Senden auf derselben Frequenz (F) und mit zueinander orthogonalen Polarisationen (P1, P2) umfasst,
    - die Quellen nach Gruppen von vier in den Richtungen X und Y benachbarten Quellen assoziiert sind;
    - für jede Gruppe von vier benachbarten Quellen die ersten Sendeports oder die zweiten Sendeports, die einem selben Wertepaar von Frequenz und Polarisation (F, P1), (F, P2) entsprechen, miteinander verbunden sind, wobei die vier miteinander verbundenen Sendeports einen Sendestrahl bilden;
    - für die Bildung jedes Strahls die Verbindungen zwischen den Sendeports einer Gruppe von vier Quellen durch die Verteilungsschaltungen realisiert sind, wobei die für die Bildung von unterschiedlichen Strahlen dedizierten Verteilungsschaltungen untereinander unabhängig sind;
    - das Netzwerk von Quellen, der Reflektor und die Verteilungsschaltungen im Hinblick auf Geometrie und Konnektivität konfiguriert sind, um eine Vollabdeckung oder eine Halbabdeckung der Dienstzone durch Sendepunkte zu bilden, die gemäß einer Abdeckkachel aus rechteckigen, rautenförmigen und quadratischen Kacheln verteilt sind.

9.  Mehrstrahl-Satellitenfunkkommunikationssystem nach Anspruch 8, bei dem
    die Kachel des Netzwerks von Ressourcen eine hexagonale Antennennetzkachel ist und die Strahlungsöffnung des Strahlungselements eine Kreis- oder Quadratform hat; und

    - zwei aufeinander folgende benachbarte Gruppen (Gr1, Gr2) in der Richtung X um einen ersten Abstand L1 voneinander beabstandet sind, entsprechend einer Quelle in der Richtung X, und eine Quelle gemeinsam haben;
    - zwei aufeinander folgende benachbarte Gruppen (Gr1, Gr3) in der Richtung Y um einen zweiten Abstand L2 beabstandet sind, entsprechend einer Quelle in der Richtung Y, und eine Quelle gemeinsam haben;

    wobei jede Gruppe von vier Quellen einen Sendestrahl im Wesentlichen mit einer Rechteck- oder Rautenform bildet, zum Regeln der assoziierten Verteilungsschaltungen.

10. Mehrstrahl-Satellitenfunkkommunikationssystem nach Anspruch 8, bei dem
    die Kachel des Netzwerks von Quellen eine hexagonale Antennennetzkachel ist und die Strahlungsöffnung des Strahlungselements eine Kreis- oder Quadratform hat; und

    - zwei aufeinanderfolgende benachbarte Gruppen (Grp1, Grp2) in der Richtung X um einen ersten Abstand L1 beabstandet sind, entsprechend einer Quelle in der Richtung X, und zwei Quellen gemeinsam haben; und zwei aufeinanderfolgende benachbarte Gruppen (Grp1, Grp3) in der Richtung Y um einen zweiten Abstand L2 beabstandet sind, entsprechend zwei Quellen in der Richtung Y, und keine Quelle gemeinsam haben; und jede Gruppe von vier Quellen einen Sendestrahl im Wesentlichen mit Rauten- oder Rechteckform zum Regeln der mit der Gruppe assoziierten Verteilungsschaltungen bildet.

11. Mehrstrahl-Satellitenfunkkommunikationssystem nach Anspruch 8, bei dem

    - die Kachel des Netzwerks von Quellen eine quadratische Antennennetzkachel ist und die Strahlungsöffnung des Strahlungselements eine quadratische Form hat; und
- die beiden Richtungen X und Y einen rechten Winkel bilden; und
- zwei aufeinanderfolgende benachbarte Gruppen (Gr1, Gr2) in der Richtung X um einen ersten Abstand L1 beabstandet sind, entsprechend einer Quelle in der Richtung X, und eine Quelle gemeinsam haben; und zwei aufeinanderfolgende benachbarte Gruppen (Gr1, Gr3) in der Richtung Y um einen zweiten Abstand L2 beabstandet sind, entsprechend einer Quelle in der Richtung Y, und eine Quelle gemeinsam haben; und

jede Gruppe von vier Quellen einen Sendestrahl mit einer im Wesentlichen quadratischen Form zum Regeln von mit der Gruppe assoziierten Verteilungsschaltungen bildet; und

das Netzwerk von Quellen, der Reflektor und die Verteilungsschaltungen im Hinblick auf Geometrie und Konnektivität konfiguriert sind, um eine Vollabdeckung der Dienstzone durch gemäß einer quadratischen Abdeckkachel verteilte Sendepunkte zu bilden.

12. Mehrstrahl-Satellitenfunkkommunikationssystem nach einem der Ansprüche 1 bis 5, bei dem das Mehrstrahl-Sendeantennensystem eine erste Sendeantenne und eine zweite Antenne mit mehreren Quellen pro Strahl (MFPB) umfasst; und

- die erste Sendeantenne einen ersten Hauptreflektor und ein erstes Netzwerk von mehreren den ersten Hauptreflektor beleuchtenden Quellen umfasst;
- die zweite Sendeantenne einen zweiten Hauptreflektor und ein zweites Netzwerk von mehreren den zweiten Hauptreflektor beleuchtenden Quellen umfasst;
- das erste und das zweite Netzwerk eine identische Architektur haben, gemäß der die Quellen eines Antennennetzes gemäß einer hexagonalen Netzwerkkachel verteilt sind, assoziiert in mehreren Gruppen, in den Richtungen X und Y einer Ebene voneinander versetzt, wobei jede Quelle ein mit einer Höchstfrequenzkette verbundenes Strahlungselement umfasst;
- jede Quelle einen ersten Sendeport und einen zweiten Sendeport auf derselben Frequenz (F1) und mit zueinander orthogonalen Polarisationen (P1, P2) umfasst,
- die Quellen nach Gruppen von vier benachbarten Quellen in den Richtungen X und Y assoziiert sind;
- für jede Gruppe von vier benachbarten Quellen die ersten Sendeports, die einem selben Wertepaar von Frequenz und Polarisation (F1, P1), (F1, P2) entsprechen, paarweise in der Richtung X, dann paarweise in der Richtung Y verbunden sind, wobei die vier untereinander verbundenen Sendeports einen Sendestrahl bilden;
- für die Bildung jedes Strahls die Verbindungen zwischen den Sendeports einer Gruppe von vier Quellen durch Verteilungsschaltungen realisiert sind, wobei die Verteilungsschaltungen, die für die Bildung von unterschiedlichen Strahlen dediziert sind, voneinander unabhängig sind;
- das erste und das zweite Netzwerk von Quellen, der erste und der zweite Hauptreflektor und die Verteilungsschaltungen im Hinblick auf Geometrie und Konnektivität konfiguriert sind, um eine Vollabdeckung der Dienstzone durch Sendepunkte zu bilden, die gemäß einer rechteckigen oder rautenförmigen Abdeckkachel verteilt sind.

13. Mehrstrahl-Satellitenfunkkommunikationssystem nach Anspruch 12, bei dem die Kachel des ersten Netzwerks von Quellen und des zweiten Netzwerks von Quellen eine hexagonale Antennennetzkachel ist und die Strahlungsöffnung des Strahlungselements jeder Quelle eine selbe Kreis- oder Quadratform hat; und für jedes Netzwerk:

- zwei aufeinanderfolgende benachbarte Gruppen (Grp1, Grp2) in der Richtung X um einen ersten Abstand L1 beabstandet sind, entsprechend einer Quelle in der Richtung X, und zwei Quellen gemeinsam haben;
- zwei aufeinanderfolgende benachbarte Gruppen (Grp1, Grp3) in der Richtung Y um einen zweiten Abstand L2 beabstandet sind, entsprechend zwei Quellen in der Richtung Y, und keine Quelle gemeinsam haben;

wobei jede Gruppe von vier Quellen einen im Wesentlichen rautenförmigen Sendestrahl zum Regeln der assoziierten Verteilungsschaltungen bildet.

14. Mehrstrahl-Satellitenfunkkommunikationssystem nach Anspruch 12, bei dem die Kachel des ersten Netzwerks von Quellen und des zweiten Netzwerks von Quellen eine hexagonale Antennennetzkachel ist und die Strahlungsöffnung des Strahlungselements jeder Quelle eine selbe Kreis- oder Quadratform hat; und für jedes Netzwerk:

- zwei aufeinanderfolgende benachbarte Gruppen (Gr1, Gr2) in der Richtung X um einen ersten Abstand L1 beabstandet sind, entsprechend einer Quelle in der Richtung X, und eine gemeinsame Quelle haben; und zwei aufeinanderfolgende benachbarte Gruppen (Gr1, Gr3) in der Richtung Y um einen zweiten Abstand L2 voneinander beabstandet sind, entsprechend einer Quelle in der Richtung Y, und eine gemeinsame Quelle haben; und

jede Gruppe von vier Quellen einen im Wesentlichen rechteckigen Sendestrahl zum Regeln der mit der Gruppe assoziierten Verteilungsschaltungen bildet.

15. Mehrstrahl-Satellitenfunkkommunikationssystem nach einem der Ansprüche 1 bis 14, bei dem der Satellit konfiguriert ist zum Strahlen, in jedem Punkt und auf seiner gesamten, seine zentrale Zone und seine periphere Zone beinhaltenden Ausdehnung, einer Farbe von gesendeten Übertragungsressourcen, gebildet aus dem Hauptfrequenzband, dem sekundären Band und dem Polarisationszustand, die dem Punkt durch den Frequenz- und Polarisationszustandsplan zugeordnet werden.

16. Mehrstrahl-Satellitenfunkkommunikationssystem nach einem der Ansprüche 1 bis 15, das ferner ein automatisches System zum Korrigieren einer Fehlweisung der Antenne umfasst, die insbesondere durch Lagevariationen der Plattform des Satelliten verursacht wird.

17. Mehrstrahl-Satellitenfunkkommunikationssystem nach einem der Ansprüche 1 bis 16, das ferner einen Satz von auf allen Punkten verteilten Empfangsterminals umfasst und jedes Terminal ein geografisches Positionierungsmittel (44) umfasst, das genau genug ist, um festzustellen, in welchem Sendepunkt es sich befindet und ob es sich in einer internen Zone oder in einer peripheren Zone des Sendepunktes befindet.

18. Mehrstrahl-Satellitenfunkkommunikationssystem nach einem der Ansprüche 1 bis 17, in dem der Planer und Zuordner von Hinweg-Übertragungsressourcen (18) auf allen Terminals und/oder einem oder mehreren Hilfsstationen verteilt oder in einer Station (54) zum Kontrollieren und Planen der Ressourcen zentralisiert ist.

19. Mehrstrahl-Satellitenfunkkommunikationssystem nach einem der Ansprüche 1 bis 18, bei dem die Größe der zentralen Zone in Abhängigkeit vom Sendepunkt und von der Zeit variiert, oder die Größe der zentralen Zone in Abhängigkeit vom Sendepunkt variiert und von der Zeit unabhängig ist, oder die Größe der zentralen Zone unabhängig von Sendepunkt und Zeit konstant ist.

20. Mehrstrahl-Satellitenfunkkommunikationssystem nach einem der Ansprüche 1 bis 19, konfiguriert für eine Sendung auf dem Hinweg durch den Satelliten in einem Band, das in dem Bändersatz C, X, Ku, Ka, L, S, Q und V enthalten ist.

21. Verfahren zum vollständigen oder teilweisen Wiederverwenden von Frequenzen eines Vollbandes, das einem Hinweg in einem Breitband-Mehrstrahl-Satellitenfunkkommunikationssystem zugeordnet ist, wobei das System Folgendes umfasst:

- einen Satelliten (10) mit einem Mehrstrahl-Sendeantennensystem (20), konfiguriert zum Abdecken einer geografischen Dienstzone (22), zerlegt in mehrere Sendepunkte (26, 28, 30, 32, 34, 36, 38, 40, 42, 44, 46, 48, 50), mit einem ersten Punktraster G1 (26, 28, 30, 36, 38, 40, 46, 48, 50) und einem zweiten Sendepunktraster G2 (32, 34, 42, 44), wobei die Sendepunkte (26, 28, 30, 32, 34, 36, 38, 40, 42, 44, 46, 48, 50) des ersten Rasters G1 und die Sendepunkte (32, 34, 42, 44) des zweiten Rasters G2 so positioniert sind und ihr Strahlungsdiagramm so konfiguriert ist, dass es Schnittpunkte (62, 64, 66, 68) zwischen den Iso-Roll-Off-Konturen einer ganzen Zahl $\underline{m}$, die gleich oder größer ist als drei, von benachbarten, teilweise überlappenden Punkten gibt, wobei die Anzahl $\underline{m}$ die Multiplizitätsfolge der Schnittpunkte bezeichnet; und
- einen Satz von Empfangsterminals (14, 16), die auf allen Sendepunkten verteilt sind, wobei jedes Empfangsterminal (14, 16) ein geografisches Positionierungsmittel (72) und ein Empfangsmittel (74) gemäß einer zugeordneten Übertragungsressource umfasst; und
- einen Planer und Zuordner von Hinweg-Übertragungsressourcen (18), realisiert in Form von einem oder mehreren elektronischen Rechnern (82);

wobei das Verfahren die folgenden Schritte beinhaltet:

- Feststellen (704) eines Hinweg-Übertragungsressourcen-Zuordnungsplans (102, 302), gemäß dem:

jeder Sendepunkt (26, 28, 30, 32, 34, 36, 38) aus einer zentralen internen Zone (106, 108, 110, 112, 114, 116, 118) und einer peripheren Zone (126, 128, 130, 132, 134, 136, 138) gebildet wird, die die zentrale interne Zone umgibt; und der erste Polarisationszustand und der zweite Polarisationszustand jeweils den Punkten des ersten Rasters G1 und den Punkten des zweiten Rasters G2 zugeordnet sind, und ein selbes Hauptband BP von Frequenzen, aus einem oder mehreren Stücken, das einen vorherrschenden Teil des Vollbandes BT im Sinne von belegtem Band bildet, insgesamt jeder internen zentralen Zone (106, 108, 110, 112, 114, 116, 118) von Punkten des ersten und zweiten Rasters zugeordnet ist; und

die Frequenzen des Vollbandes BT, die nicht Teil des Hauptbandes BP sind, ein sekundäres Band BS aus einem oder aus mehreren Stücken bilden, das in eine ganze Zahl n von gleich oder größer als 2 von sekundären Subbändern jeweils aus einem Stück zerlegt ist, getrennt oder benachbart, verteilt auf der Gesamtheit der peripheren Zonen (126, 128, 130, 132, 134, 136, 138) der Sendepunkte gemäß einem mehrfarbigen Schema mit n Farben von sekundären Subbändern;

- Zuordnen (706) zu einem Empfangsterminal (14, 16), wenn dieser es anfordert, einer Hinweg-Übertragungsressource im Hinblick auf ein Frequenzsubband des Vollbandes BT und einen Polarisationszustand, ausgewählt aus einem ersten Polarisationszustand P1 und einem zweiten Polarisationszustand P2 in Abhängigkeit von der geografischen Position des Empfangsterminals (14, 16), so dass

die Schnittpunkte zwischen den Punkten des ersten und zweiten Rasters vierfache Schnittpunkte sind, das heißt mit einer Multiplizitätsordnung von 4; und die Vierfachpunkte nützliche elementare Abdeckflächen mit einem Verhältnis von einer pro Punkt definieren, die eine Kachelung der Abdeckzone bilden, und

jede nützliche elementare Fläche eine Kachel der Kachelung mit der Form eines Parallelogramms bildet, und

jede interne Zone in eine nützliche elementare Fläche eingeschrieben ist.

**22.** Verfahren zum Wiederverwenden von Frequenzen nach Anspruch 21, das ferner die folgenden Schritte beinhaltet:

- für jedes Terminal, das über eine Übertragungsressource verfügen möchte,

\* Feststellen (708), in welchem Sendepunkt es sich befindet und ob es sich in einer internen Zone oder in einer peripheren Zone befindet, dann

\* Zuordnen, wenn sich das Terminal in einer internen Zone befindet, zu dem Terminal einer Übertragungsressource des Hauptbandes und des Polarisationszustands, die der internen Zone des Sendepunkts zugeordnet wurden, in dem sich das Terminal befindet, oder

Zuordnen, wenn sich das Terminal in einer peripheren Zone befindet, zu dem Terminal einer Senderessource des Hilfssubbandes und des Polarisationszustands, die der peripheren Zone des Sendepunkts zugeordnet wurden, in dem sich das Terminal befindet.

**23.** Verfahren zur Frequenzwiederverwendung nach einem der Ansprüche 21 bis 22, bei dem

die Größe der zentralen Zone in Abhängigkeit vom Sendepunkt und von der Zeit variiert, oder

die Größe der zentralen Zone in Abhängigkeit vom Sendepunkt variiert und von der Zeit unabhängig ist, oder

die Größe der zentralen Zone von Sendepunkt und Zeit unabhängig konstant ist.

## Claims

**1.** Broadband multibeam satellite radio communication system, configured for fractional reuse of frequencies of a total band BT allocated to a forward channel (4), comprising

- a satellite (10) having a multibeam transmission antenna system (20), configured to cover a geographical service area (22) which is broken down into a plurality of transmission spots (26, 28, 30, 32, 34, 36, 38, 40, 42, 44, 46, 48, 50), having a first grid G1 of transmission spots (26, 28, 30, 36, 38, 40, 46, 48, 50) and a second grid G2 of transmission spots (32, 34, 42, 44), the transmission spots (26, 28, 30, 32, 34, 36, 38, 40, 42, 44, 46, 48, 50) of the first grid G1 and the transmission spots (32, 34, 42, 44) of the second grid G2 being positioned and their radiation patterns being configured so that there are points of intersection (62, 64, 66, 68) between the roll-off isocontours of a whole number $\underline{m}$, greater than or equal to three, of partially overlapping adjacent spots, the number $\underline{m}$ denoting the order of multiplicity of the points of intersection; and

- a set of receiving terminals (14, 16) which are distributed over all of the transmission spots, each receiving terminal (14, 16) comprising a geographical positioning means (72) and a receiving means (74) according to an allocated transmission resource;

- a forward channel transmission resource planner and allocator (18), which is implemented in the form of one or more electronic processors (82) and which is configured to assign to a receiving terminal (14, 16), when it makes a request, a forward channel transmission resource in terms of a frequency sub-band of the total band BT and a polarization state taken from among a first polarization state P1 and a second polarization state P2 in accordance with the geographical position of the receiving terminal (14, 16) and a forward channel transmission resource allocation plan (102, 302) according to which

each transmission spot (26, 28, 30, 32, 34, 36, 38) is constituted by a central internal zone (106, 108, 110, 112, 114, 116, 118) and a peripheral zone (126, 128, 130, 132, 134, 136, 138) surrounding the central internal zone; and
the first polarization state and the second polarization state are respectively allocated to the spots of the first grid G1 and the spots of the second grid G2, and
the same main band BP of frequencies in one piece or in multiple pieces, forming a dominant part of the total band BT in terms of occupied band, is allocated wholly to each central internal zone (106, 108, 110, 112, 114, 116, 118) of the spots of the first and second grids; and
the frequencies of the total band BT which are not part of the main band BP form a secondary band BS in one piece or in multiple pieces which is broken down into a whole number n, greater than or equal to 2, of secondary sub-bands each in one piece which are, separately or adjacently, distributed over all of the peripheral zones (126, 128, 130, 132, 134, 136, 138) of the transmission spots according to a multicoloured diagram with n colours of secondary sub-bands; and
the points of intersection between the spots of the first and second grids are quadruple points of intersection, that is to say, having an order of multiplicity equal to 4.

2. Multibeam satellite radio communication system according to Claim 1, wherein
the quadruple points define elemental useful coverage surfaces at the rate of one per spot which form a pavement of the coverage zone, and
each elemental useful surface constitutes a mesh of the pavement of the same size and of the same shape, and
the shape of the mesh is a parallelogram.

3. Multibeam satellite radio communication system according to Claim 2, wherein the shape of the mesh is a square or a rectangle or a diamond.

4. Multibeam satellite radio communication system according to any one of Claims 1 to 3, wherein each internal zone is inscribed in the elemental useful surface of the transmission spot thereof.

5. Multibeam satellite radio communication system according to any one of Claims 1 to 4, wherein
the number n of secondary sub-bands is a whole number included in the set of numbers 2, 3, 4, 7 and 12, and preferably equal to 2.

6. Multibeam satellite radio communication system according to any one of Claims 1 to 5, wherein
the first and second polarization states (P1, P2) are the left-hand circular polarization and the right-hand circular polarization or a first linear polarization according to a first axis and a second linear polarization according to a second axis, which is orthogonal with respect to the first axis.

7. Multibeam satellite radio communication system according to any one of Claims 1 to 5, wherein the multibeam transmission antenna system comprises first and second single feed per beam (SFPB) transmission antennae,
the first antenna comprising a first network of distributed feeds in accordance with a square first network mesh and a first main reflector;
the second antenna comprising a second network of distributed feeds in accordance with a square second network mesh and a second main reflector; and
the first and second networks of feeds and the first and second main reflectors are geometrically configured so as to form a coverage for the service area with quadruple points and square coverage mesh.

8. Multibeam satellite radio communication system according to any one of Claims 1 to 6, wherein the multibeam transmission antenna system comprises a single multiple feed per beam (MFPB) transmission antenna; and
the transmission antenna comprises a main reflector and a network of a plurality of feeds illuminating the reflector, the feeds being distributed according to a hexagonal or square antenna network mesh and being associated in a plurality of groups which are staggered in relation to one another in X and Y directions of a plane, each feed comprising a radiating element linked to a microwave channel;

   - each feed comprises a first port and a second port for transmission of the same frequency (F) and with polarizations (P1, P2) which are orthogonal relative to each other,
   - the feeds are associated by groups of four adjacent feeds in X and Y directions;
   - for each group of four adjacent feeds, the first transmission ports or the second transmission ports corresponding to the same pair of frequency and polarization values (F, P1), (F, P2) are connected to each other, the four transmission ports connected to each other forming a transmission beam;

- for the formation of each beam, the links between the transmission ports of a group of four feeds are implemented by distribution circuits, the distribution circuits dedicated to the formation of different beams being independent of each other;

- the network of feeds, the reflector and the distribution circuits are configured in terms of geometry and connectivity so as to form a total coverage or a semi-coverage of the service area by means of transmission spots distributed in accordance with a coverage mesh which is included among the rectangular, diamond-shaped and square meshes.

9. Multibeam satellite radio communication system according to Claim 8, wherein
the mesh of the network of feeds is a hexagonal antenna network mesh and the radiating aperture of the radiating element has a circular or square shape; and

- two consecutive adjacent groups (Gr1, Gr2) in the X direction are spaced apart by a first pitch L1 corresponding to a feed in the X direction and share a feed in common;
- two consecutive adjacent groups (Gr1, Gr3) in the Y direction are spaced apart by a second pitch L2 corresponding to a feed in the Y direction and share a feed in common;

each group of four feeds forming a transmission beam of substantially rectangular or diamond-like shape for adjustment of the associated distribution circuits.

10. Multibeam satellite radio communication system according to Claim 8, wherein
the mesh of the network of feeds is a hexagonal antenna network mesh and the radiating aperture of the radiating element has a circular or square shape; and

- two consecutive adjacent groups (Grp1, Grp2) in the X direction are spaced apart by a first pitch L1 corresponding to a feed in the X direction and share two feeds in common; and two consecutive adjacent groups (Grp1, Grp3) in the Y direction are spaced apart by a second pitch L2 corresponding to two feeds in the Y direction and do not share any feed in common; and

each group of four feeds forms a transmission beam of substantially diamond-like or rectangular shape for adjustment of the distribution circuits associated with said group.

11. Multibeam satellite radio communication system according to Claim 8, wherein

- the mesh of the network of feeds is a square antenna network mesh and the radiating aperture of the radiating element has a square shape; and
- the two directions X and Y form a right angle; and
- two consecutive adjacent groups (Gr1, Gr2) in the X direction are spaced apart by a first pitch L1 corresponding to a feed in the X direction and share a feed in common; and two consecutive adjacent groups (Gr1, Gr3) in the Y direction are spaced apart by a second pitch L2 corresponding to a feed in the Y direction and share a feed in common; and

each group of four feeds forms a transmission beam of substantially square shape for adjustment of the distribution circuits associated with said group; and the network of feeds, the reflector and the distribution circuits are configured in terms of geometry and connectivity so as to form a total coverage of the service area by means of transmission spots distributed in accordance with a square coverage mesh.

12. Multibeam satellite radio communication system according to any one of Claims 1 to 5, wherein the multibeam transmission antenna system comprises a first transmission antenna and a second multiple feed per beam (MFPB) antenna; and

- the first transmission antenna comprises a first main reflector and a first network of multiple feeds illuminating the first main reflector;
- the second transmission antenna comprises a second main reflector and a second network of multiple feeds illuminating the second main reflector;
- the first and second networks have an identical architecture in accordance with which the feeds of an antenna network are distributed according to a hexagonal network mesh in a manner associated in a plurality of groups which are staggered in relation to one another in X and Y directions of a plane, each feed comprising a radiating element linked to a microwave channel;
- each feed comprises a first port and a second port for transmission of the same frequency (F1) and with polarizations (P1, P2) which are orthogonal to each other;
- the feeds are associated by groups of four adjacent feeds in the X and Y directions;
- for each group of four adjacent feeds, the first transmission ports corresponding to the same pair of frequency and polarization values (F1, P1), (F1, P2) are connected two by two in the X direction then two by two in the Y direction, the four transmission ports connected to each other forming a transmission beam;
- for the formation of each beam, the links between the transmission ports of a group of four feeds are implemented by distribution circuits, the distribution circuits dedicated to the formation of different beams being independent of each other;
- the first and second networks of feeds, the first and second main reflectors and the distribution circuits are configured in terms of geometry and connectivity so as to form a total coverage of the service area by means of transmission spots distributed in accordance with a rectangular or diamond-like coverage mesh.

13. Multibeam satellite radio communication system according to Claim 12, wherein
the mesh of the first network of feeds and of the second network of feeds is a hexagonal antenna network mesh and the radiating aperture of the radiating element of each feed has the same circular or square shape; and
for each network:

- two consecutive adjacent groups (Grp1, Grp2) in the X direction are spaced apart by a first pitch L1 corresponding to a feed in the X direction and share two feeds in common;
- two consecutive adjacent groups (Grp1, Grp3) in the Y direction are spaced apart by a second pitch L2 corresponding to two feeds in the Y direction and do not share any feed in common;

each group of four feeds forming a transmission beam of substantially diamond-like shape for adjustment of the associated distribution circuits.

14. Multibeam satellite radio communication system according to Claim 12, wherein
the mesh of the first network of feeds and of the second network of feeds is a hexagonal antenna network mesh and the radiating aperture of the radiating element of each feed has the same circular or square shape; and
for each network:

- two consecutive adjacent groups (Gr1, Gr2) in the X direction are spaced apart by a first pitch L1 corresponding to a feed in the X direction and share a feed in common; and two consecutive adjacent groups (Gr1, Gr3) in the Y direction are spaced apart by a second pitch L2 corresponding to a feed in the Y direction and share a feed in common; and

each group of four feeds forms a transmission beam of substantially rectangular shape for adjustment of the distribution circuits associated with said group.

15. Multibeam satellite radio communication system according to any one of Claims 1 to 14, wherein the satellite is configured to radiate in each spot and over the whole extent thereof, including its central zone and its peripheral zone, a transmitted colour of transmission resources which is formed by the main frequency band, by the secondary band and by the polarization state which are allocated to the spot by the frequency and polarization state plan.

16. Multibeam satellite radio communication system according to any one of Claims 1 to 15, further comprising an automatic system for correcting the depointing of the antenna caused in particular by variations in attitude of the platform of the satellite.

17. Multibeam satellite radio communication system according to any one of Claims 1 to 16, further comprising
a set of receiving terminals which are distributed over all of the spots, and each terminal comprises a geographical positioning means (44) which is sufficiently precise to determine the transmission spot wherein it is located, and whether it is located in an internal zone or in a peripheral zone of said transmission spot.

18. Multibeam satellite radio communication system according to any one of Claims 1 to 17, wherein
the forward channel transmission resource planner and allocator (18) is distributed over all of the terminals and/or over one or more auxiliary stations or is in centralized form in a station (54) for controlling the resources and the planning thereof.

19. Multibeam satellite radio communication system according to any one of Claims 1 to 18, wherein
the size of the central zone varies in accordance with the transmission spot and time, or
the size of the central zone varies in accordance with the transmission spot and is independent of time or
the size of the central zone is constant independently of the transmission spot and time.

20. Multibeam satellite radio communication system according to any one of Claims 1 to 19, configured for transmission of the forward channel by the satellite in a band included in all of the bands C, X, Ku, Ka, L, S, Q and V.

21. Method for complete or fractional reuse of frequencies of a total band allocated to a forward channel in a broadband multibeam satellite radio communication system, the system comprising

- a satellite (10) having a multibeam transmission antenna system (20) configured to cover a geographical service area (22) which is broken down into a plurality of transmission spots (26, 28, 30, 32, 34, 36, 38, 40, 42, 44, 46, 48, 50), having a first grid G1 of spots (26, 28, 30, 36, 38, 40, 46, 48, 50) and a second grid G2 of transmission spots (32, 34, 42, 44), the transmission spots (26, 28, 30, 32, 34, 36, 38, 40, 42, 44, 46, 48, 50) of the first grid G1 and the transmission spots (32, 34, 42, 44) of the second grid G2 being positioned and their radiation patterns being configured so that there are points of intersection (62, 64, 66, 68) between the roll-off isocontours of a whole number m, greater than or equal to three, of partially overlapping adjacent spots, the number m denoting the order of multiplicity of the points of intersection; and
- a set of receiving terminals (14, 16) which are distributed over all of the transmission spots, each receiving terminal (14, 16) comprising a geographical positioning means (72) and a receiving means (74) according to an allocated transmission resource; and
- a forward channel transmission resource planner and allocator (18), implemented in the form of one or more electronic processors (82);
the method comprising the steps involving
- determining (704) a forward channel transmission resource allocation plan (102, 302) according to which
each transmission spot (26, 28, 30, 32, 34, 36, 38) is constituted by a central internal zone (106, 108, 110, 112, 114, 116, 118) and a peripheral zone (126, 128, 130, 132, 134, 136, 138) surrounding the central internal zone; and
the first polarization state and the second polarization state are allocated to the spots of the first grid G1 and to the spots of the second grid G2, respectively, and
the same main band BP of frequencies in one piece or in multiple pieces, forming a dominant part of the total band BT in terms of occupied band, is allocated wholly to each central internal zone (106, 108, 110, 112, 114, 116, 118) of the spots of the first and second grids; and
the frequencies of the total band BT which are not part of the main band BP form a secondary band BS in one piece or in multiple pieces which is broken down into a whole number n, greater than or equal to 2, of secondary sub-bands each in one piece which are, separately or adjacently, distributed over all of the peripheral zones (126, 128, 130, 132, 134, 136, 138) of the transmission spots according to a multicoloured diagram with n colours of secondary sub-bands,
- assigning (706) to a receiving terminal (14, 16), when it makes a request, a forward channel transmission resource in terms of a frequency sub-band of the total band BT and of a polarization state taken from among a first polarization state P1 and a second polarization state P2 in accordance with the geographical position of the receiving terminal (14, 16), so that
the points of intersection between the spots of the first and second grids are quadruple points, that is to say, having an order of multiplicity equal to 4; and
the quadruple points define elemental useful coverage surfaces at the rate of one per spot which form a pavement of the coverage zone, and
each elemental useful surface constitutes a mesh of the pavement having the shape of a parallelogram, and
each internal zone is inscribed in an elemental useful surface.

22. Method for frequency reuse according to Claim 21, further comprising the steps involving:

- for each terminal which wishes to have a transmission resource,

  * determining (708) the transmission spot in which it is located and whether it is located in an internal zone or in a peripheral zone, then,
  * when the terminal is located in an internal zone, allocating to the terminal a transmission resource of the main band and of the polarization state which have been assigned to the internal zone of the transmission spot in which the terminal is located, or,

when the terminal is located in a peripheral zone, allocating to the terminal a transmission resource of the auxiliary sub-band and the polarization state which have been assigned to the peripheral zone of the transmission spot in which the terminal is located.

23. Method for frequency reuse according to any one of Claims 21 to 22, wherein
the size of the central zone varies in accordance with the transmission spot and time, or
the size of the central zone varies in accordance with the transmission spot and is independent of time or
the size of the central zone is constant independently of the transmission spot and time.

FIG.1

FIG.2

FIG.3

Réservoir de ressources utilisées par un terminal en fonction de son emplacement

| | Premier état de polarisation P1 |
| | Deuxième état de polarisation P2 |

PI6
PI5
PI4
PI3
PI2
PI1

Fréquences

FIG.4

| | Premier état de polarisation P1 |
| | Deuxième état de polarisation P2 |

FIG.5

Premier état de polarisation P1
Deuxième état de polarisation P2

FIG.6

Distance par rapport au centre du spot/rayon du spot

FIG.7

FIG.8A      FIG.8B

Distance par rapport au centre du spot/rayon du spot

FIG.9

FIG.10A

FIG.10B

FIG.11

FIG.12

FIG.13

FIG.14

FIG.15

FIG.16

FIG.17

FIG.18

FIG.19

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2434578 A

- FR 2939971

**Littérature non-brevet citée dans la description**

- Fractional Frequency Reuse in fixed Boadband High Throughput Satellite systems. **O. VIDAL et al.** Proceedings of 31 st AIAA International Communication Satellite Systems Conférence. 14 Octobre 2013